(19) Europäisches Patentamt / European Patent Office / Office européen des brevets

(11) **EP 3 182 757 B1**

(12) **EUROPEAN PATENT SPECIFICATION**

(45) Date of publication and mention
of the grant of the patent:
**20.05.2020 Bulletin 2020/21**

(21) Application number: **14904175.8**

(22) Date of filing: **15.10.2014**

(51) Int Cl.:
*H04W 36/00* *(2009.01)*      *H04W 36/04* *(2009.01)*
*H04W 36/22* *(2009.01)*

(86) International application number:
**PCT/CN2014/088669**

(87) International publication number:
**WO 2016/058147 (21.04.2016 Gazette 2016/16)**

(54) **LOAD DISTRIBUTING METHOD AND NETWORK-SIDE DEVICE IN HETEROGENEOUS NETWORK**

LASTVERTEILUNGSVERFAHREN UND NETZWERKSEITIGE VORRICHTUNG IN EINEM HETEROGENEN NETZWERK

PROCÉDÉ DE DISTRIBUTION DE CHARGE ET DISPOSITIF CÔTÉ RÉSEAU DANS UN RÉSEAU HÉTÉROGÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.06.2017 Bulletin 2017/25**

(73) Proprietor: **HUAWEI TECHNOLOGIES CO., LTD. Shenzhen Guangdong 518129 (CN)**

(72) Inventors:
• **LUO, Zezhou**
  **Shenzhen**
  **Guangdong 518129 (CN)**

• **ZHUANG, Hongcheng**
  **Shenzhen**
  **Guangdong 518129 (CN)**

(74) Representative: **Epping - Hermann - Fischer Patentanwaltsgesellschaft mbH Schloßschmidstraße 5 80639 München (DE)**

(56) References cited:
**CN-A- 102 724 721      CN-A- 103 596 250
CN-A- 103 918 303      US-A1- 2013 084 864
US-A1- 2013 189 996      US-A1- 2014 187 243
US-A1- 2014 198 659      US-B1- 8 644 841**

**Description**

**TECHNICAL FIELD**

The present invention relates to the field of communications technologies, and specifically, to a method for offloading load in a heterogeneous network, and a network side device.

**BACKGROUND**

With rapid development of a mobile service, a future wireless network needs to provide partial high-capacity coverage for a service hotspot area when providing wide-area continuous coverage. For the basic wide-area continuous coverage and the partial large-capacity coverage, a heterogeneous network (English: HetNet) defined by the 3rd Generation Partnership Project (3GPP for short includes two layers of networks: The first layer is a macro cell providing the basic wide-area continuous coverage, and the second layer is a micro cell providing the partial large-capacity coverage. A coverage area of the second-layer micro cell is superposed on a coverage area of the first-layer macro cell, and provides a partial large-capacity access service for the service hotspot area.

By adjusting a service range of the micro cell, the micro cell can offload load to an extent when the macro cell is overloaded. By appropriately using the micro cell to offload load of the macro cell, resource utilization of the macro cell and the micro cell can be coordinated, thereby improving resource utilization of the whole network.

Currently, a method for offloading load of the macro cell is performing cell association determining on an activated user equipment that is in the current macro cell and that generates a service, and offloading the activated user equipment to an associated cell based on a result of the cell association determining. However, this method is only for offloading a user equipment that is in the macro cell and that generates a service, and if there is a new accessing user equipment, or an idle user equipment turns into an activated user equipment, cell association determining needs to be performed again on all user equipments. Therefore, when user equipments in different states are being offloaded, a process of the method is relatively cumbersome.

From US 2014/0198659 A1 methods and network hardware for load balancing between cells in a heterogeneous network are known.

**SUMMARY**

A network side device and a method for offloading load according to the independent claims are provided. Dependent claims provide preferred embodiments. The phrase "embodiment of the invention" denotes an example of the network side device or of the method for offloading, respectively.

Embodiments of the present invention provide a method for offloading load in a heterogeneous network, and a network side device, so as to easily perform load offloading on user equipments in different states.

A first aspect provides a network side device, a heterogeneous network in which the network side device is located includes a macro cell and at least one micro cell in the macro cell, and the network side device includes: an obtaining unit, configured to obtain load information of a target micro cell in the at least one micro cell and service distribution information of at least one user equipment within a first preset range around the target micro cell in the macro cell; a determining unit, configured to determine an offloading threshold according to the load information of the target micro cell and the service distribution information, where the offloading threshold is corresponding to a parameter indicating a propagation environment of the target micro cell; and an offloading unit, configured to determine, according to the offloading threshold, whether a to-be-offloaded user equipment performs communication by using the macro cell or by using the target micro cell.

With reference to the first aspect, in a first possible implementation manner of the first aspect, the determining unit is specifically configured to: determine, according to the service distribution information, load usage, in the target micro cell, of the user equipment that is in the at least one user equipment within the first preset range around the target micro cell and that is to be offloaded to the target micro cell; and determine the offloading threshold according to the load usage and the load information of the target micro cell.

With reference to the first possible implementation manner of the first aspect, in a second possible implementation manner of the first aspect, the load information of the target micro cell includes a load margin of the target micro cell; and the determining unit is specifically configured to: determine the offloading threshold when the load usage is less than the load margin of the target micro cell.

With reference to any possible implementation manner of the first aspect or the first to the second possible implementation manners of the first aspect, in a third possible implementation manner of the first aspect, the network side device further includes: a selection unit, configured to select the target micro cell from the at least one micro cell, where the target micro cell has highest macro service intensity in macro service intensity of the at least one micro cell, and the macro service intensity indicates service intensity of a user equipment in a macro cell around a micro cell.

With reference to any possible implementation manner of the first aspect or the first to the third possible implementation manners of the first aspect, in a fourth possible implementation manner of the first aspect, the obtaining unit is specifically configured to: rasterize a coverage area of the macro cell, to obtain at least one raster; determine at least one target raster in the at least one raster, where the at least one target raster is within a second preset range around the target micro cell; and determine that at least one average service amount corresponding to the at least one target raster is the service distribution information.

With reference to any possible implementation manner of the first aspect or the first to the third possible implementation manners of the first aspect, in a fifth possible implementation manner of the first aspect, the obtaining unit is specifically configured to: classify a network coverage area of the macro cell, to obtain at least one category; determine at least one target category in the at least one category, where the at least one target category is within a second preset range around the target micro cell; and determine that at least one average service amount corresponding to the at least one target category is the service distribution information.

With reference to any possible implementation manner of the first aspect or the first to the fifth possible implementation manners of the first aspect, in a sixth possible implementation manner of the first aspect, the parameter indicating the propagation environment of the target micro cell is a path loss, and the offloading unit is specifically configured to: when a path loss between the to-be-offloaded user equipment and a micro base station in the target micro cell is less than or equal to the offloading threshold, determine that the to-be-offloaded user equipment performs communication by using the target micro cell, or when a path loss between the to-be-offloaded user equipment and a micro base station in the target micro cell is greater than the offloading threshold, determine that the to-be-offloaded user equipment performs communication by using the macro cell.

With reference to any possible implementation manner of the first aspect or the first to the fifth possible implementation manners of the first aspect, in a seventh possible implementation manner of the first aspect, if the parameter indicating the propagation environment of the target micro cell is a channel gain, the offloading unit is specifically configured to: when a channel gain between the to-be-offloaded user equipment and a micro base station in the target micro cell is less than the offloading threshold, determine that the to-be-offloaded user equipment performs communication by using the macro cell, or when a channel gain between the to-be-offloaded user equipment and a micro base station in the target micro cell is greater than or equal to the offloading threshold, determine that the to-be-offloaded user equipment performs communication by using the target micro cell.

With reference to any possible implementation manner of the first aspect or the first to the seventh possible implementation manners of the first aspect, in an eighth possible implementation manner of the first aspect, when the offloading unit determines that the to-be-offloaded user equipment performs communication by using the target micro cell, the offloading unit is further configured to: when the to-be-offloaded user equipment is in an active state, hand over the to-be-offloaded user equipment, so that the to-be-offloaded user equipment is handed over to the target micro cell; or when the to-be-offloaded user equipment is in an idle state, perform cell reselection for the to-be-offloaded user equipment, so that the target micro cell is selected for the to-be-offloaded user equipment; or when the to-be-offloaded user equipment is in a state of attempting to access the macro cell, perform access control on the to-be-offloaded user equipment, so that the to-be-offloaded user equipment accesses the target micro cell.

A second aspect provides a method for offloading load in a heterogeneous network, the heterogeneous network includes a macro cell and at least one micro cell in the macro cell, and the method includes: obtaining load information of a target micro cell in the at least one micro cell and service distribution information of at least one user equipment within a first preset range around the target micro cell in the macro cell; determining an offloading threshold according to the load information of the target micro cell and the service distribution information, where the offloading threshold is corresponding to a parameter indicating a propagation environment of the target micro cell; and determining, according to the offloading threshold, whether a to-be-offloaded user equipment performs communication by using the macro cell or by using the target micro cell.

With reference to the second aspect, in a first possible implementation manner of the second aspect, the determining an offloading threshold according to the load information of the target micro cell and the service distribution information includes: determining, according to the service distribution information, load usage, in the target micro cell, of the user equipment that is in the at least one user equipment within the first preset range around the target micro cell and that is to be offloaded to the target micro cell; and determining the offloading threshold according to the load usage and the load information of the target micro cell.

With reference to the first possible implementation manner of the second aspect, in a second possible implementation manner of the second aspect, the load information of the target micro cell includes a load margin of the target micro cell, and the determining the offloading threshold according to the load usage and the load information of the target micro cell includes: determining the offloading threshold when the load usage is less than the load margin of the target micro cell.

With reference to any possible implementation manner of the second aspect or the first to the second possible implementation manners of the second aspect, in a third possible implementation manner of the second aspect, the method further includes: selecting the target micro cell from the at least one micro cell, where the target micro cell has highest macro service intensity in macro service intensity of the at least one micro cell, and the macro service intensity indicates service intensity of a user equipment in a macro cell around a micro cell.

With reference to any possible implementation manner of the second aspect or the first to the third possible implementation manners of the second aspect, in a fourth possible implementation manner of the second aspect, the obtaining service distribution information of at least one user equipment within a first preset range around the target micro cell in the macro cell includes: rasterizing a coverage area of the macro cell, to obtain at least one raster; determining at least one target raster in the at least one raster, where the at least one target raster is within a second preset range around the target micro cell; and determining that at least one average service amount corresponding to the at least one target raster is the service distribution information. With reference to any possible implementation manner of the second aspect or the first to the third possible implementation manners of the second aspect, in a fifth possible implementation manner of the second aspect, the obtaining service distribution information of at least one user equipment within a first preset range around the target micro cell in the macro cell includes: classifying a network coverage area of the macro cell, to obtain at least one category; determining at least one target category in the at least one category, where the at least one target category is within a second preset range around the target micro cell; and determining that at least one average service amount corresponding to the at least one target category is the service distribution information.

With reference to any possible implementation manner of the second aspect or the first to the fifth possible implementation manners of the second aspect, in a sixth possible implementation manner of the second aspect, the determining, according to the offloading threshold, whether a to-be-offloaded user equipment performs communication by using the macro cell or by using the target micro cell includes: if the parameter indicating the propagation environment of the target micro cell is a path loss, when a path loss between the to-be-offloaded user equipment and a micro base station in the target micro cell is less than or equal to the offloading threshold, determining that the to-be-offloaded user equipment performs communication by using the target micro cell, or when a path loss between the to-be-offloaded user equipment and a micro base station in the target micro cell is greater than the offloading threshold, determining that the to-be-offloaded user equipment performs communication by using the macro cell.

With reference to any possible implementation manner of the second aspect or the first to the fifth possible implementation manners of the second aspect, in a seventh possible implementation manner of the second aspect, the determining, according to the offloading threshold, whether a to-be-offloaded user equipment performs communication by using the macro cell or by using the target micro cell includes: if the parameter indicating the propagation environment of the target micro cell is a channel gain, when a channel gain between the to-be-offloaded user equipment and a micro base station in the target micro cell is less than the offloading threshold, determining that the to-be-offloaded user equipment performs communication by using the macro cell, or when a channel gain between the to-be-offloaded user equipment and a micro base station in the target micro cell is greater than or equal to the offloading threshold, determining that the to-be-offloaded user equipment performs communication by using the target micro cell.

With reference to any possible implementation manner of the second aspect or the first to the seventh possible implementation manners of the second aspect, in an eighth possible implementation manner of the second aspect, when the offloading unit determines that the to-be-offloaded user equipment performs communication by using the target micro cell, the method further includes: when the to-be-offloaded user equipment is in an active state, handing over the to-be-offloaded user equipment, so that the to-be-offloaded user equipment is handed over to the target micro cell; or when the to-be-offloaded user equipment is in an idle state, performing cell reselection for the to-be-offloaded user equipment, so that the target micro cell is selected for the to-be-offloaded user equipment; or when the to-be-offloaded user equipment is in a state of attempting to access the macro cell, performing access control on the to-be-offloaded user equipment, so that the to-be-offloaded user equipment accesses the target micro cell.

The network side device in the embodiments of the present invention determines an offloading threshold according to service distribution information of a user equipment around a micro cell in a macro cell and a load status of the micro cell. In this way, when user equipments in different states are being offloaded, there is no need to re-determine all user equipments. The user equipments in different states in the macro cell only need to be compared with the offloading threshold, so that a user equipment meeting an offloading condition is offloaded to the micro cell. Therefore, the method can be used to easily perform load offloading on user equipments in different states.

BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1 is a schematic diagram of an application scenario of an embodiment of the present invention;

FIG. 2 is a schematic block diagram of a network side device according to an embodiment of the present invention;

FIG. 3 is a flowchart of triggering offloading of load of a macro cell according to an embodiment of the present invention;

FIG. 4 is a flowchart of triggering a target micro cell to offload load according to an embodiment of the present invention;

FIG. 5 is a schematic block diagram of a network side device according to another embodiment of the present invention;

FIG. 6 is a schematic flowchart of a method for offloading load in a heterogeneous network according to an embodiment of the present invention;

FIG. 7 is a flowchart of a process of offloading load in a heterogeneous network according to an embodiment of the present invention; and

FIG. 8 is a block diagram of a network side device according to another embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

It should be understood that, the technical solutions of the embodiments of the present invention may be applied to various communications systems, such as: a Global System for Mobile Communications (GSM for short) system, a Code Division Multiple Access (CDMA for short) system, a Wideband Code Division Multiple Access (WCDMA for short) system, a general packet radio service (GPRS for short), a Long Term Evolution (LTE for short) system, an LTE frequency division duplex (FDD for short) system, an LTE time division duplex (TDD for short), a Universal Mobile Telecommunications System (UMTS for short), a Worldwide Interoperability for Microwave Access (WiMAX for short) communications system, or the like.

A user equipment (UE for short), also referred to as a mobile terminal (MT for short), a mobile user equipment, and the like, may communicate with one or more core networks by using a radio access network (RAN for short). The user equipment may be a mobile terminal, such as a mobile phone (also referred to as a "cellular" phone) and a computer with a mobile terminal. For example, the user equipment may be a portable, pocket-sized, handheld, computer built-in, or in-vehicle mobile apparatus.

A base station may be a base transceiver station (BTS for short) in GSM or CDMA, or may be a NodeB in WCDMA, or may be an evolved NodeB (eNB or e-NodeB, evolved Node B) in LTE. This is not limited in the present invention.

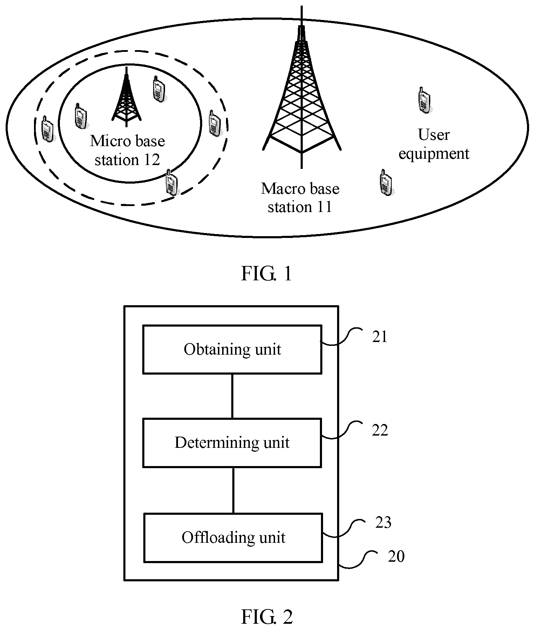

FIG. 1 is a schematic diagram of an application scenario of an embodiment of the present invention.

The scenario shown in FIG. 1 is a heterogeneous network scenario. In FIG. 1, within a coverage area of a macro base station 11, a micro base station 12 is disposed, and may be used to provide partial large-capacity coverage for a hotspot area. A coverage area of the micro base station 12 is relatively small, and is superposed on the coverage area of the macro base station 11.

It should be understood that for ease of description, only one macro base station and one micro base station are described in FIG. 1. In this embodiment of the present invention, a heterogeneous network may include at least one macro base station and at least one micro base station. In addition, a quantity of micro base stations in a macro base station is not limited to one, and there may be two or more micro base stations. Optionally, in another embodiment, a coverage area of a micro base station may fall within an overlapped coverage area of multiple macro base stations.

It should be further understood that one macro base station may be corresponding to one macro cell, and one micro base station may be corresponding to one micro cell. In FIG. 1, a macro cell in which the macro base station 11 is located may include a micro cell in which the micro base station 12 is located. By adjusting a service range of the micro cell, the micro cell can offload load to an extent when the macro cell is overloaded.

FIG. 2 is a schematic block diagram of a network side device according to an embodiment of the present invention. The network side device shown in FIG. 2 may be a centralized controller in a heterogeneous network system. As shown in FIG. 2, a heterogeneous network in which the network side device 20 is located may include a macro cell and at least one micro cell in the macro cell, and the network side device 20 may include:

an obtaining unit 21, configured to obtain load information of a target micro cell in the at least one micro cell and service distribution information of at least one user equipment within a first preset range around the target micro cell in the macro cell;

a determining unit 22, configured to determine an offloading threshold according to the load information of the target micro cell and the service distribution information, where the offloading threshold is corresponding to a parameter indicating a propagation environment of the target micro cell; and

an offloading unit 23, configured to determine, according to the offloading threshold, whether a to-be-offloaded user equipment performs communication by using the macro cell or by using the target micro cell.

The network side device in this embodiment of the present invention determines an offloading threshold according to service distribution information of a user equipment around a micro cell in a macro cell and a load status of the micro cell. In this way, when user equipments in different states are being offloaded, there is no need to re-determine all user equipments. The user equipments in different states in the macro cell only need to be compared with the offloading threshold, so that a user equipment meeting an offloading condition is offloaded to the micro cell. Therefore, the method can be used to easily perform load offloading on user equipments in different states.

The centralized controller may be connected to the macro cell and the micro cell, obtain the service distribution information of the user equipment in the macro cell and the micro cell and the load information of the micro cell by using the connection, and send the determined offloading threshold to the macro cell and the micro cell by using the connection.

It should be understood that the macro cell in this embodiment of the present invention is a cell whose load is to be offloaded. The macro cell may include at least one micro cell. The load of the macro cell needs to be offloaded to the target micro cell included in the at least one micro cell, that is, a service range of the target micro cell is expanded to access more user equipments, so as to mitigate load congestion of the macro cell.

For ease of description, only one target micro cell is described in this embodiment of the present invention. It should be understood that in this embodiment of the present invention, multiple target micro cells may be used to offload the load of the macro cell.

The first preset range may be preset according to an actual requirement. For example, if a relatively large quantity of user equipments need to be offloaded, the first preset range may be set to a relatively large value; or if a relatively small quantity of user equipments need to be offloaded, the first preset range may be set to a relatively small value. The first preset range may also be preset according to an access capability of the micro base station. For example, the first preset range may be preset according to the access capability of the micro base station. If the access capability of the micro base station in the target micro cell is relatively strong, the first preset range may be set to a relatively large value; or if the access capability of the micro base station in the target micro cell is relatively weak, the first preset range may be set to a relatively small value.

It should be understood that the service distribution information of the at least one user equipment may indicate a service distribution status of the at least one user equipment. The service distribution status may include location information and a service amount of the user equipment.

Load of a cell may be classified into air interface load and backhaul load. Generally, the air interface load may be defined as radio resource utilization, and the backhaul load may be defined as a ratio of an average rate of a backhaul link to a largest nominal rate. For example, in a Long Term Evolution (LTE for short) network, the air interface load may be defined as a ratio of a quantity of evenly-allocated resource blocks (RB for short) to a total quantity of RBs.

A base station of a cellular network has two hops: an air interface link and a backhaul link, to complete data transmission between a user equipment and a core network. For each cell, when load congestion occurs in either the air interface link or the backhaul link, a service capability of the cell is affected. Therefore, each cell has two load thresholds: an air interface load threshold and a backhaul load threshold.

It should be understood that the load information of the target micro cell may indicate a load status of the target micro cell. Specifically, the load information of the target micro cell may be load usage of the target micro cell and a load threshold of the target micro cell, or may be a load margin of the target micro cell. It should be understood that the load margin may be determined according to a difference value between the load threshold and the load usage, and indicates a remaining load amount that can be occupied.

Specifically, the load usage of the target micro cell may include an air interface load usage and a backhaul load usage that are of the target micro cell. The load threshold of the target micro cell may include an air interface load threshold and a backhaul load threshold that are of the target micro cell. The load margin of the target micro cell may include an air interface load margin and a backhaul load margin.

Optionally, in an embodiment, the determining unit 22 in this embodiment of the present invention may directly obtain, by means of calculation, the offloading threshold based on an existing algorithm according to the service amount of the at least one user equipment and the load information of the target micro cell.

Optionally, in another embodiment, the determining unit 22 in this embodiment of the present invention may also select an optimal offloading threshold from multiple specified offloading thresholds according to the service amount of the at least one user equipment and the load information of the target micro cell.

Optionally, in another embodiment, the determining unit 22 in this embodiment of the present invention may also determine an adjustment step of the offloading threshold according to the service amount of the at least one user equipment and the load information of the target micro cell, and perform an optimum search according to the step to obtain the offloading threshold. For how to determine the offloading threshold according to the service distribution information of the at least one user equipment and the load information of the target micro cell, this embodiment of the present invention is not limited thereto.

It should be understood that the offloading threshold is corresponding to a parameter indicating a propagation environment of the target micro cell. In an actual application, the offloading threshold may be a path loss, or may be a channel gain.

Optionally, in an embodiment, the offloading unit 23 may determine, according to the offloading threshold, whether the to-be-offloaded user equipment performs communication by using the macro cell or by using the target micro cell. That is, when the user equipment performs communication by using the target micro cell, offloading of the user equipment in the macro cell is completed. It should be understood that the to-be-offloaded user equipment may be user equipments in different states. For example, the to-be-offloaded user equipment may be an activated user equipment in the current macro cell, that is, a user equipment generating a service; or may be an idle user equipment in the current macro cell, that is, a user equipment generating no service; or may be a user equipment that is in the current macro cell and that attempts to access the macro cell. A status of the to-be-offloaded user equipment is not limited in this embodiment of the present invention.

The network side device in this embodiment of the present invention determines an offloading threshold according to service distribution information of a user equipment around a micro cell in a macro cell and a load status of the micro cell. In this way, when user equipments in different states are being offloaded, there is no need to re-determine all user equipments. The user equipments in different states in the macro cell only need to be compared with the offloading threshold, so that a user equipment meeting an offloading condition is offloaded to the micro cell. Therefore, the method can be used to easily perform load offloading on user equipments in different states.

For the macro cell, when load of either the air interface load or the backhaul load exceeds a corresponding load threshold, the load of the macro cell exceeds a normal level, and a corresponding mechanism such as triggering offloading of load of the macro cell needs to be enabled, so to ensure that load of the macro cell remains stable.

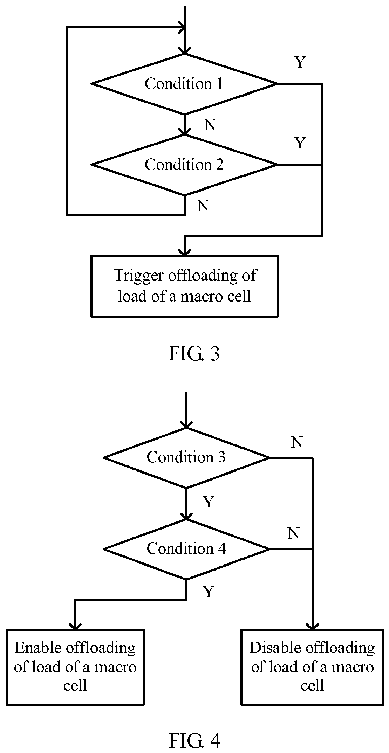

FIG. 3 is a flowchart of triggering offloading of load of a macro cell according to an embodiment of the present invention. A process of triggering offloading of the load of the macro cell in FIG. 3 may be executed by a network side device. The macro cell includes an air interface load threshold and a backhaul load threshold. As shown in FIG. 3, when a condition 1 is met or a condition 2 is met, the network side device triggers load offloading, that is, the network side device offloads the load of the macro cell. The condition 1 is that air interface load of the macro cell is greater than the air interface load threshold; and the condition 2 is that backhaul load of the macro cell is greater than the backhaul load threshold.

It should be understood that when either the condition 1 or the condition 2 is met, the network side device triggers load offloading. Therefore, when neither the condition 1 nor the condition 2 is met, the network side device does not trigger load offloading. Optionally, the network side device may periodically determine the condition 1 and the condition 2.

Optionally, in an embodiment, the macro cell may measure the air interface load and the backhaul load, and actively report the air interface load and the backhaul load to the network side device. Optionally, in another embodiment, the network side device may also request the macro cell to report the air interface load and the backhaul load that are of the macro cell.

For how to trigger offloading of the load of the macro cell, this embodiment of the present invention is not limited thereto.

Accordingly, the micro cell also includes an air interface load threshold and a backhaul load threshold, and when the micro cell has an idle resource, the load of the macro cell can be offloaded. That the micro cell has an idle resource indicates that two hops of air interface load and backhaul load that are of the micro cell are less than a corresponding load threshold. Specifically, details are described in the following with reference to FIG. 4.

FIG. 4 is a flowchart of enabling a micro cell to offload load according to an embodiment of the present invention. A process of enabling the micro cell to offload load shown in FIG. 4 may be executed by a network side device. The micro cell includes an air interface load threshold and a backhaul load threshold. As shown in FIG. 4,

When a condition 3 is met and a condition 4 is met, the network side device enables offloading of the load to the micro cell, that is, the network side device offloads the load of the macro cell to the micro cell. The condition 3 is that air interface load of the micro cell is less than the air interface load threshold; and the condition 4 is that backhaul load of the micro cell is less than the backhaul load threshold.

It should be understood that when both the condition 3 and the condition 4 are met, the network side device enables offloading of the load to the micro cell. Therefore, when not both the condition 3 and the condition 4 are met, the micro cell cannot offload the load.

Optionally, in an embodiment, the micro cell may measure the air interface load and the backhaul load, and actively report the air interface load and the backhaul load to the network side device. Optionally, in another embodiment, the network side device may also request the micro cell to report the air interface load and the backhaul load that are of the micro cell.

For how to enable offloading of the load to the micro cell, this embodiment of the present invention is not limited thereto.

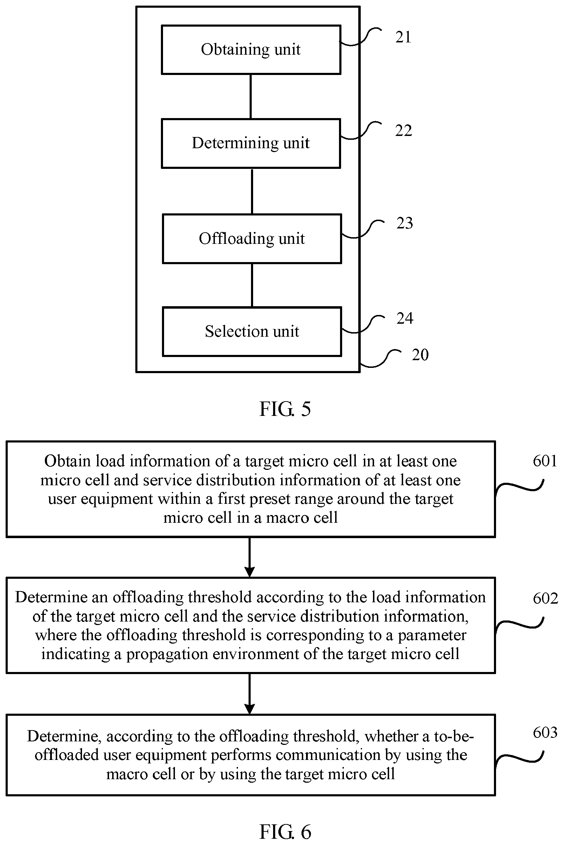

FIG. 5 is a schematic block diagram of a network side device according to another embodiment of the present invention. The network side device 20 further includes a selection unit 24. A device in FIG. 5 that is the same as the device in FIG. 2 uses the same name and reference sign as those of the device in FIG. 2.

The selection unit 24 is configured to select a target micro cell from at least one micro cell, where the target micro cell has highest macro service intensity in macro service intensity of the at least one micro cell, and the macro service intensity indicates service intensity of a user equipment in a macro cell around a micro cell.

The network side device in this embodiment of the present invention determines an offloading threshold according to a service amount of a user equipment around a micro cell in a macro cell and a load status of the micro cell. In this way, when user equipments in different states are being offloaded, there is no need to re-determine all user equipments. The user equipments in different states in the macro cell only need to be compared with the offloading threshold, so that a user equipment meeting an offloading condition is offloaded to the micro cell. Therefore, the method can be used to easily perform load offloading on user equipments in different states.

In addition, the network side device may select, from multiple micro cells, a micro cell having highest service intensity for offloading. The method can effectively improve offloading efficiency, and improve service quality of a whole network.

It should be understood that only when both the condition 3 and the condition 4 shown in FIG. 4 are met, the target micro cell used to offload load of the macro cell has an idle resource for offloading the load of the macro cell.

It should be further understood that the target micro cell in the at least one micro cell is used to offload the load of the macro cell. Optionally, the network side device in this embodiment of the present invention may select the target micro cell based on an access capability of a micro base station. For example, if an access capability of a micro base station in a micro cell is strong, the micro cell is selected as the target micro cell. The network side device in this embodiment of the present invention may select the target micro cell based on a service amount of a user equipment in a macro cell around a micro cell. For example, if a user equipment in a macro cell around a micro cell has intensive services, the micro cell is selected as the target micro cell.

Optionally, in another embodiment, a procedure of selecting the target micro cell by the selection unit 24 may be as follows:

obtain service distribution information of a user equipment in a macro cell around the at least one micro cell, where each micro cell is corresponding to one piece of service distribution information;
determine, according to the service distribution information of the user equipment, at least one intensity parameter corresponding to the at least one micro cell, where the at least one intensity parameter respectively indicates corresponding service intensity of the user equipment in the macro cell around the at least one micro cell; and
determine a micro cell corresponding to a largest value in the at least one intensity parameter as the target micro cell.

An area around the at least one micro cell may be preset according to an actual requirement. For example, if a relatively large quantity of user equipments need to be offloaded, the area around the at least one micro cell may be set to a relatively large value; and if a relatively small quantity of user equipments need to be offloaded, the area around the at least one micro cell may be set to a relatively small value. The area around the at least one micro cell may also be preset according to an access capability of the micro base station. For example, the area around the at least one micro cell may be preset according to the access capability of the micro base station. If the access capability of the micro base station in the target micro cell is relatively strong, the area around the at least one micro cell may be set to a relatively large value; or if the access capability of the micro base station in the target micro cell is relatively weak, the area around the at least one micro cell may be set to a relatively small value.

A method for obtaining, by the network side device, a service amount of at least one user equipment in the macro cell may be the same as that for obtaining a service amount of the user equipment in the macro cell around the at least one micro cell in the macro cell. A difference is that the at least one user equipment is around a micro cell, that is, around the target micro cell, but the user equipment in the macro cell around the at least one micro cell is around the at least one micro cell. A procedure of obtaining the service amount of the at least one user equipment by the network side device is described in detail in the following.

Optionally, in an embodiment, the network side device 20 may rasterize a coverage area of the macro cell, to obtain at least one raster; determine at least one target raster in the at least one raster, where the at least one target raster is within a second preset range around the target micro cell; and determine that at least one average service amount corresponding to the at least one target raster is the service distribution information.

It should be understood that each raster may include at least one user equipment, and there is a corresponding channel between a user equipment in the raster and the micro base station in the target micro cell. Channels between different user equipments in the raster and the micro base station in the target micro cell are similar.

Specifically, a raster is a geographically continuous small area, and in this area, channels between different user equipments and the base station are highly similar. The network side device may obtain, from a user equipment, a geographical location of the user equipment, and may determine, according to the geographical location, a raster to which each user equipment belongs. The network side device may determine the at least one target raster in the at least one raster, and the at least one target raster is within the second preset range around the target micro cell. The network side device may determine an average service amount of user equipments in each target raster in the at least one target raster. Therefore, at least one average service amount corresponding to the at least one target raster forms the service distribution information of the at least one user equipment in the macro cell.

Optionally, in another embodiment, the network side device 20 may further classify a coverage area of the macro cell, to obtain at least one category; determine at least one target category in the at least one category, where the at least one target category is within a second preset range around the target micro cell; and determine that at least one average service amount corresponding to the at least one target category is the service distribution information.

It should be understood that each category may include at least one user equipment, and there is a corresponding channel between a user equipment in the category and the micro base station in the target micro cell. Channels between different user equipments in the category and the micro base station in the target micro cell are similar.

Specifically, channels between different user equipments in a same category and the base station are highly similar. The network side device may determine the at least one target category in the at least one category, and the at least one target category is within the second preset range around the target micro cell. The network side device may determine an average service amount of user equipments in each target category in the at least one target category. Therefore, at least one average service amount corresponding to the at least one target category forms the service distribution information of the at least one user equipment in the macro cell.

Accordingly, for obtaining, by the network side device, service distribution information of the user equipment around the at least one micro cell of the macro cell, reference may be made to the foregoing procedure of obtaining the service distribution information of the at least one user equipment in the macro cell, and details are not described herein.

The at least one target raster or category is within the second preset range around the target micro cell. The second preset range may be preset according to an actual requirement. For example, if a relatively large quantity of user equipments need to be offloaded, the second preset range may be set to a relatively large value; and if a relatively small quantity of user equipments need to be offloaded, the second preset range may be set to a relatively small value. The second preset range may also be preset according to an access capability of the micro base station. For example, the second preset range may be preset according to the access capability of the micro base station. If the access capability of the micro base station in the target micro cell is relatively strong, the second preset range may be set to a relatively large value; or if the access capability of the micro base station in the target micro cell is relatively weak, the second preset range may be set to a relatively small value.

Optionally, in another embodiment, one micro cell may be corresponding to one intensity parameter, and an area around one micro cell is corresponding to at least one raster or category. The intensity parameter may indicate service intensity of a user equipment in a macro cell around the micro cell. A formula for calculating the intensity parameter may be as follows:

$$utility_i = \sum_{n \in U_i} w_n \cdot \log_2 \left( 1 + g_{n,i} \right)$$

$i$ is a number of the at least one micro cell, $g_{n,i}$ is a channel gain between a raster n or a category n and a corresponding micro cell $i$, $w_n$ is an average service amount of the raster n or the category n, $U_i$ is a set of rasters n or categories n of the macro cell around the at least one micro cell, and n is a quantity of rasters or categories. $g_{n,i}$ may be classified into an uplink channel gain or a downlink channel gain. The uplink channel gain may be measured by a base station, and the downlink channel gain may be measured by the user equipment. A larger intensity parameter $utility_i$ indicates more intensive services of a user equipment in a macro cell around the micro cell $i$.

Optionally, in another embodiment, the network side device in this embodiment of the present invention may mark a micro cell in which offloading is not performed and a micro cell in which offloading is performed that are in the at least one micro cell. For micro cells in which offloading is not performed, the network side device may sort, in descending order, multiple intensity parameters of the micro cells in which offloading is not performed. When the target micro cell is being selected, a micro cell with a maximum intensity parameter is selected each time as the target micro cell to offload the load of the macro cell. It should be understood that after a current target micro cell performs offloading, if the macro cell still meets a condition of triggering offloading of the load of the macro cell, another target micro cell is selected, for offloading again, from remaining micro cells in which offloading is not performed, until the macro cell does not meet the condition of triggering offloading of the load of the macro cell or there is no available micro cell in which offloading is not performed.

Optionally, in an embodiment, the determining unit 22 is specifically configured to:

determine, according to the service distribution information, load usage, in the target micro cell, of the user equipment that is in the at least one user equipment within the first preset range around the target micro cell and that is to be offloaded to the target micro cell; and
determine the offloading threshold according to the load usage and the load information of the target micro cell.

The load information of the target micro cell may include a load margin of the target micro cell, and the determining unit 22 is specifically configured to:
determine the offloading threshold when the load usage is less than the load margin of the target micro cell.

The following describes in detail how to determine the offloading threshold.

Specifically, the user equipment to be offloaded to the target micro cell is first determined according to the service distribution information of the at least one user equipment. The user equipment may be located in a current service range of the target micro cell. The current service range of the target micro cell may be determined according to the prior art, or the current service range may be determined by using the method in this embodiment of the present invention before load offloading is triggered this time. It should be understood that at least one user equipment that is in the current service range and that is to be offloaded to the target micro cell is not offloaded, and the current service range may be not an optimal service range. Therefore, an optimal offloading threshold may be determined by using the method in this embodiment of the present invention.

Then, for each user equipment in the user equipment to be offloaded to the target micro cell, load usage of each user equipment in the target micro cell is calculated. The load usage may include an air interface load usage and a backhaul load usage. To calculate the air interface load usage and the backhaul load usage, a rate and a resource occupation amount of the user equipment that can be obtained in the target micro cell need to be first obtained. A specific formula may be as follows:

$$ r_{macro} = w_{macro} \cdot \log\left(1 + \frac{p_{macro} \cdot g_{macro}}{I}\right) $$

$$ r_{pico} = w_{pico} \cdot \log\left(1 + \frac{p_{pico} \cdot g_{pico}}{I}\right) $$

$r_{macro}$ is a rate obtained, in the macro cell, by any user equipment in the user equipment to be offloaded to the target micro cell; $r_{pico}$ is a rate that can be obtained when any user equipment in the user equipment to be offloaded to the target micro cell is offloaded to the target micro cell; $w_{macro}$ is a resource amount occupied, in the macro cell, by any user equipment in the user equipment to be offloaded to the target micro cell; $w_{pico}$ is a resource amount occupied, in the target micro cell, by any user equipment in the user equipment to be offloaded to the target micro cell; $p_{macro}$ is a maximum transmit power of the macro cell; $p_{pico}$ is a maximum transmit power of the target micro cell; $g_{macro}$ is a channel gain between any user equipment in the user equipment to be offloaded to the target micro cell and a macro base station in the macro cell; and $g_{pico}$ is a channel gain between any user equipment in the user equipment to be offloaded to the target micro cell and a micro base station in a micro cell. $p_{macro}$ and $p_{pico}$ are known values, and $w_{macro}$, $g_{macro}$, and $g_{pico}$ may be measured by a user equipment and reported to the network side device. $w_{pico}$ may be obtained according to a condition: $r_{pico}=r_{macro}$.

Finally, the load usage, at a current offloading threshold, that is in the target micro cell and that is of the user equipment to be offloaded to the target micro cell is calculated. A calculation formula may be as follows:

$$ delta\_load\_air = \frac{\sum_{i \in U} w_{i,pico}}{W} $$

$$delta\_load\_backhaul = \sum_{i \in U} \frac{r_{i,pico}}{R}$$

$delta\_load\_air$ is an air interface load usage that is in the target micro cell and that is of at least one user equipment to be offloaded to the target micro cell; $delta\_load\_backhaul$ is a backhaul load usage that is in the target micro cell and that is of the at least one user equipment to be offloaded to the target micro cell; $w_{i,pico}$ indicates a resource amount occupied, in the target micro cell, by a user equipment $i$ in the at least one user equipment to be offloaded to the target micro cell; $r_{i,pico}$ is a rate that can be obtained, in the target micro cell, by the user equipment $i$ in the at least one user equipment to be offloaded to the target micro cell; $W$ is a total resource amount of the target micro cell; and $R$ is a maximum nominal rate of a backhaul link of the target micro cell.

Optionally, in another embodiment, the network side device in this embodiment of the present invention may further obtain at least one raster or category including at least one user equipment to be offloaded to the target micro cell. In this way, calculating load usage of each user equipment, in the target micro cell, in the at least one user equipment to be offloaded to the target micro cell may be replaced by calculating an average load usage of the at least one raster or category in the target micro cell.

$r_{macro}$ is an average rate obtained, in the macro cell, by a user equipment in any raster or category in the at least one raster or category; $r_{pico}$ is an average rate that can be obtained when a user equipment in any raster or category in the at least one raster or category is offloaded to the target micro cell; $w_{macro}$ is an average resource amount occupied, in the macro cell, by a user equipment in any raster or category in the at least one raster or category; $w_{pico}$ is an average resource amount occupied, in the target micro cell, by a user equipment in any raster or category in the at least one raster or category; $p_{macro}$ is a maximum transmit power of the macro cell; $p_{pico}$ is a maximum transmit power of the target micro cell; $g_{macro}$ is a channel gain between any raster or category in the at least one raster or category and the macro base station of the macro cell; and $g_{pico}$ is a channel gain between any raster or category in the at least one raster or category and the micro base station in the micro cell.

Specifically, when the offloading threshold is indicated by a path loss, an optimized formula of the offloading threshold may be as follows:

$$\begin{cases} \max\left(path\_loss\_to\_micro\right), \\ delta\_load\_air < \delta_1, \\ delta\_load\_backhaul < \delta_2. \end{cases}$$

The max function is a function for taking a maximum value, $\delta_1$ is an air interface load margin of the target micro cell, and $\delta_2$ is a backhaul load margin of the target micro cell. The foregoing formula indicates that when $delta\_load\_air$ is less than the air interface load margin of the target micro cell and $delta\_load\_backhaul$ is less than the backhaul load margin of the target micro cell, a maximum value of the offloading threshold is selected as an optimal offloading threshold.

Similarly, when the offloading threshold is indicated by a channel gain, the max function may be replaced by a min function, and the min function is a function for taking a minimum value.

Optionally, in another embodiment, if the parameter indicating the propagation environment of the target micro cell is a path loss, the offloading unit 23 is specifically configured to: when a path loss between the to-be-offloaded user equipment and a micro base station in the target micro cell is less than or equal to the offloading threshold, determine that the to-be-offloaded user equipment performs communication by using the target micro cell, or when a path loss between the to-be-offloaded user equipment and a micro base station in the target micro cell is greater than the offloading threshold, determine that the to-be-offloaded user equipment performs communication by using the macro cell.

Optionally, in another embodiment, if the parameter indicating the propagation environment of the target micro cell is a channel gain, the offloading unit 23 is specifically configured to: when a channel gain between the to-be-offloaded user equipment and a micro base station in the target micro cell is less than the offloading threshold, determine that the to-be-offloaded user equipment performs communication by using the macro cell, or when a channel gain between the to-be-offloaded user equipment and a micro base station in the target micro cell is greater than or equal to the offloading threshold, determine that the to-be-offloaded user equipment performs communication by using the target micro cell.

Optionally, in another embodiment, when the offloading unit 23 determines that the to-be-offloaded user equipment performs communication by using the target micro cell, the offloading unit is further configured to:

when the to-be-offloaded user equipment is in an active state, hand over the to-be-offloaded user equipment, so that the to-be-offloaded user equipment is handed over to the target micro cell; or

when the to-be-offloaded user equipment is in an idle state, perform cell reselection for the to-be-offloaded user equipment, so that the target micro cell is selected for the to-be-offloaded user equipment; or

when the to-be-offloaded user equipment is in a state of attempting to access the macro cell, perform access control on the to-be-offloaded user equipment, so that the to-be-offloaded user equipment accesses the target micro cell.

Specifically, there are multiple manners in which the network side device hands over the activated user equipment to the target micro cell. For example, the network side device may modify a cell selection offset of the activated user equipment, so that the activated user equipment chooses to be handed over to the target micro cell. The network side device may also directly send instruction information to the activated user equipment, to instruct the activated user equipment to be handed over to the target micro cell.

Optionally, the network side device may modify a cell section offset of an idle user equipment, so that the idle user equipment may actively select the target micro cell as a serving cell.

Optionally, the network side device may send instruction information to the user equipment attempting to access the macro cell, to instruct the user equipment to access the target micro cell.

FIG. 6 is a schematic flowchart of a method for offloading load in a heterogeneous network according to an embodiment of the present invention. The heterogeneous network includes a macro cell and at least one micro cell in the macro cell. The method includes:

601. Obtain load information of a target micro cell in the at least one micro cell and service distribution information of at least one user equipment within a first preset range around the target micro cell in the macro cell.

602. Determine an offloading threshold according to the load information of the target micro cell and the service distribution information, where the offloading threshold is corresponding to a parameter indicating a propagation environment of the target micro cell.

603. Determine, according to the offloading threshold, whether a to-be-offloaded user equipment performs communication by using the macro cell or by using the target micro cell.

The network side device in this embodiment of the present invention determines an offloading threshold according to service distribution information of a user equipment around a micro cell in a macro cell and a load status of the micro cell. In this way, when user equipments in different states are being offloaded, there is no need to re-determine all user equipments. The user equipments in different states in the macro cell only need to be compared with the offloading threshold, so that a user equipment meeting an offloading condition is offloaded to the micro cell. Therefore, the method can be used to easily perform load offloading on user equipments in different states.

It should be understood that the method in FIG. 6 may be executed by the network side device involved in FIG. 1 to FIG. 5. To avoid repetition, details are not described herein again. Optionally, in another embodiment, in 602, the network side device may determine, according to the service distribution information, load usage, in the target micro cell, of a user equipment that is to be offloaded to the target micro cell and that is in the at least one user equipment within the first preset range around the target micro cell; and determine the offloading threshold according to the load usage and the load information of the target micro cell.

Optionally, in another embodiment, the network side device may determine the offloading threshold when the load usage is less than a load margin of the target micro cell.

Optionally, in another embodiment, the method may further include: selecting the target micro cell from the at least one micro cell, where the target micro cell has highest macro service intensity in macro service intensity of the at least one micro cell, and the macro service intensity indicates service intensity of a user equipment in a macro cell within a service range of a micro cell.

Optionally, in another embodiment, in 601, the network side device may rasterize a coverage area of the macro cell, to obtain at least one raster; determine at least one target raster in the at least one raster, where the at least one target raster is within a second preset range around the target micro cell; and determine that at least one average service amount corresponding to the at least one target raster is the service distribution information.

Optionally, in another embodiment, in 601, the network side device may classify a network coverage area of the macro cell, to obtain at least one category; determine at least one target category in the at least one category, where the at least one target category is within a second preset range around the target micro cell; and determine that at least one average service amount corresponding to the at least one target category is the service distribution information.

Optionally, in another embodiment, in 603, the parameter indicating the propagation environment of the target micro cell is a path loss. When a path loss between the to-be-offloaded user equipment and a micro base station in the target micro cell is less than or equal to the offloading threshold, it is determined that the to-be-offloaded user equipment performs communication by using the target micro cell; or when a path loss between the to-be-offloaded user equipment and a micro base station in the target micro cell is greater than the offloading threshold, it is determined that the to-be-offloaded user equipment performs communication by using the macro cell.

Optionally, in another embodiment, in 603, the parameter indicating the propagation environment of the target micro cell is a channel gain. When a channel gain between the to-be-offloaded user equipment and a micro base station in the target micro cell is less than the offloading threshold, it is determined that the to-be-offloaded user equipment performs communication by using the macro cell; or when a channel gain between the to-be-offloaded user equipment and a micro base station in the target micro cell is greater than or equal to the offloading threshold, it is determined that the to-be-offloaded user equipment performs communication by using the target micro cell.

Optionally, in another embodiment, when the offloading unit determines that the to-be-offloaded user equipment performs communication by using the target micro cell, the method further includes:

when the to-be-offloaded user equipment is in an active state, handing over the to-be-offloaded user equipment, so that the to-be-offloaded user equipment is handed over to the target micro cell; or
when the to-be-offloaded user equipment is in an idle state, performing cell reselection for the to-be-offloaded user equipment, so that the target micro cell is selected for the to-be-offloaded user equipment; or
when the to-be-offloaded user equipment is in a state of attempting to access the macro cell, performing access control on the to-be-offloaded user equipment, so that the to-be-offloaded user equipment accesses the target micro cell.

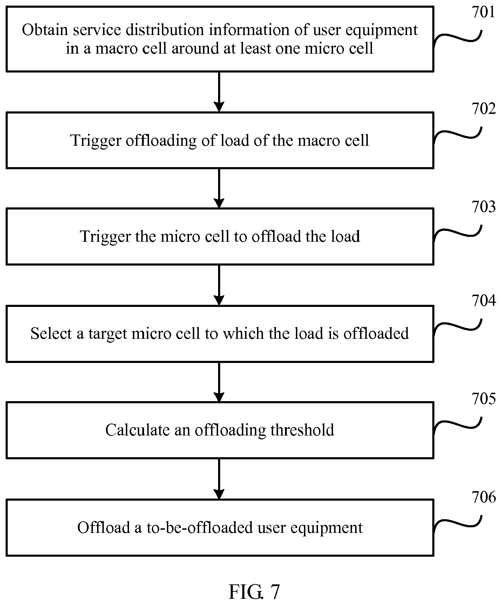

FIG. 7 is a flowchart of a process of offloading load in a heterogeneous network according to an embodiment of the present invention. As shown in FIG. 7, the process of offloading load may be executed by the network side device involved in FIG. 1 to FIG. 6. The heterogeneous network includes a macro cell and at least one micro cell in the macro cell. The process includes the following steps.

701. Obtain service distribution information of user equipment in the macro cell around the at least one micro cell.

Optionally, the network side device may rasterize a coverage area of the macro cell, and select a raster around a micro cell from multiple obtained rasters. Channels between different user equipments in the raster and a micro base station in the micro cell are similar. Specifically, the network side device obtains geographic locations of user equipments in the macro cell, identifies, according to the geographic locations of the user equipments, a raster to which each user equipment belongs, and collects statistics on an average service amount of user equipments in each raster. An average service amount of a raster around the micro cell forms the service distribution information of the user equipment in the macro cell around the at least one micro cell.

Optionally, the network side device may classify a coverage area of the macro cell, and select a category around a micro cell from multiple obtained categories. Channels between different user equipments in the category and a micro base station in the micro cell are similar. An average service amount of a category around the micro cell forms the service distribution information of the user equipment in the macro cell around the at least one micro cell.

702. Trigger offloading of load of the macro cell.

Specifically, the method for triggering offloading of the load of the macro cell is the same as that in FIG. 3. To avoid repetition, details are not described herein again.

When air interface load of the macro cell is greater than an air interface load threshold, or when backhaul load of the macro cell is greater than a backhaul load threshold, the network side device triggers offloading of the load of the macro cell.

703. Trigger the micro cell to offload the load.

Specifically, the method for triggering the micro cell to offload the load is the same as that in FIG. 4. To avoid repetition, details are not described herein again.

When air interface load of the micro cell is less than an air interface load threshold, and backhaul load of the micro cell is less than a backhaul load threshold, the network side device triggers the micro cell to offload the load.

704. Select a target micro cell to which the load is offloaded.

One micro cell may be corresponding to one intensity parameter, and an area around one micro cell is corresponding to at least one raster or category. The intensity parameter may indicate service intensity of a user equipment in a macro cell around the micro cell. A formula for calculating the intensity parameter may be as follows:

$$utility_i = \sum_{n \in U_i} w_n \cdot \log_2 \left(1 + g_{n,i}\right)$$

$i$ is a number of the at least one micro cell, $g_{n,i}$ is a channel gain between a raster n or a category n and a corresponding micro cell $i$, $w_n$ is an average service amount of the raster n or the category n, $U_i$ is a set of rasters n or categories n of the macro cell around the at least one micro cell, and n is a quantity of rasters or categories. $g_{n,i}$ may be classified into an uplink channel gain or a downlink channel gain. The uplink channel gain may be measured by a base station, and the downlink channel gain may be measured by the user equipment. A larger intensity parameter *utility$_i$* indicates more intensive services of a user equipment in a macro cell around the micro cell *i*.

Optionally, in another embodiment, the network side device in this embodiment of the present invention may mark a micro cell in which offloading is not performed and a micro cell in which offloading is performed that are in the at least one micro cell. For micro cells in which offloading is not performed, the network side device may sort, in descending order, multiple intensity parameters of the micro cells in which offloading is not performed. When the target micro cell is being selected, a micro cell with a maximum intensity parameter is selected each time as the target micro cell to offload the load of the macro cell. It should be understood that after a current target micro cell performs offloading, if the macro cell still meets a condition of triggering offloading of the load of the macro cell, another target micro cell is selected, for offloading again, from remaining micro cells in which offloading is not performed, until the macro cell does not meet the condition of triggering offloading of the load of the macro cell or there is no available micro cell in which offloading is not performed.

705. Calculate an offloading threshold.

Specifically, the user equipment to be offloaded to the target micro cell is first determined according to the service distribution information of the user equipment around the target micro cell. The user equipment to be offloaded to the target micro cell may be in a current service range of the target micro cell. The current service range of the target micro cell may be determined according to the prior art, or the current service range may be determined by using the method in this embodiment of the present invention before load offloading is triggered this time. It should be understood that the user equipment that is in the current service range and that is to be offloaded to the target micro cell is not offloaded, and the current service range may be not an optimal service range. Therefore, an optimal offloading threshold may be determined by using the method in this embodiment of the present invention.

Then, for each user equipment in the user equipment to be offloaded to the target micro cell, load usage of each user equipment in the target micro cell is calculated. The load usage may include an air interface load usage and a backhaul load usage. To calculate the air interface load usage and the backhaul load usage, a rate and a resource occupation amount of the user equipment that can be obtained in the target micro cell need to be first obtained, where the user equipment is to be offloaded to the target micro cell. A specific formula may be as follows:

$$r_{macro} = w_{macro} \cdot \log\left(1 + \frac{p_{macro} \cdot g_{macro}}{I}\right)$$

$$r_{pico} = w_{pico} \cdot \log\left(1 + \frac{p_{pico} \cdot g_{pico}}{I}\right)$$

$r_{macro}$ is a rate obtained, in the macro cell, by any user equipment in the user equipment to be offloaded to the target micro cell; $r_{pico}$ is a rate that can be obtained when any user equipment in the user equipment to be offloaded to the target micro cell is offloaded to the target micro cell; $w_{macro}$ is a resource amount occupied, in the macro cell, by any user equipment in the user equipment to be offloaded to the target micro cell; $w_{pico}$ is a resource amount occupied, in the target micro cell, by any user equipment in the user equipment to be offloaded to the target micro cell; $p_{macro}$ is a maximum transmit power of the macro cell; $p_{pico}$ is a maximum transmit power of the target micro cell; $g_{macro}$ is a channel gain between any user equipment in the user equipment to be offloaded to the target micro cell and a macro base station in the macro cell; and $g_{pico}$ is a channel gain between any user equipment in the user equipment to be offloaded to the target micro cell and a micro base station in a micro cell. $p_{macro}$ and $p_{pico}$ are known values, and $w_{macro}$, $g_{macro}$, and $g_{pico}$ may be measured by a user equipment and reported to the network side device. $w_{pico}$ may be obtained according to a condition: $r_{pico} = r_{macro}$.

Finally, the load usage, at a current offloading threshold, that is in the target micro cell and that is of the user equipment to be offloaded to the target micro cell is calculated. A calculation formula may be as follows:

$$delta\_load\_air = \frac{\sum_{i \in U} w_{i,pico}}{W}$$

$$delta\_load\_backhaul = \sum_{i \in U} \frac{r_{i,pico}}{R}$$

*delta_load_air* is an air interface load usage that is in the target micro cell and that is of the user equipment to be offloaded to the target micro cell; *delta_load_backhaul* is a backhaul load usage that is in the target micro cell and that is of the user equipment to be offloaded to the target micro cell; $w_{i,pico}$ indicates a resource amount occupied, in the target micro cell, by user equipment $i$ in the user equipment to be offloaded to the target micro cell; $r_{i,pico}$ is a rate that can be obtained, in the target micro cell, by the user equipment $i$ in the user equipment to be offloaded to the target micro cell; $W$ is a total resource amount of the target micro cell; and $R$ is a maximum nominal rate of a backhaul link of the target micro cell.

Optionally, in another embodiment, the network side device in this embodiment of the present invention may further obtain at least one raster or category including the user equipment to be offloaded to the target micro cell. In this way, calculating load usage of each user equipment, in the target micro cell, in the user equipment to be offloaded to the target micro cell may be replaced by calculating an average load usage of the at least one raster or category in the target micro cell.

$r_{macro}$ is an average rate obtained, in the macro cell, by a user equipment in any raster or category in the at least one raster or category; $r_{pico}$ is an average rate that can be obtained when a user equipment in any raster or category in the at least one raster or category is offloaded to the target micro cell; $w_{macro}$ is an average resource amount occupied, in the macro cell, by a user equipment in any raster or category in the at least one raster or category; $w_{pico}$ is an average resource amount occupied, in the target micro cell, by a user equipment in any raster or category in the at least one raster or category; $p_{macro}$ is a maximum transmit power of the macro cell; $p_{pico}$ is a maximum transmit power of the target micro cell; $g_{macro}$ is a channel gain between any raster or category in the at least one raster or category and a macro base station of the macro cell; and $g_{pico}$ is a channel gain between any raster or category in the at least one raster or category and a micro base station in a micro cell.

Specifically, when the offloading threshold is indicated by a path loss, an optimized formula of the offloading threshold may be as follows:

$$\begin{cases} \max(path\_loss\_to\_micro), \\ delta\_load\_air < \delta_1, \\ delta\_load\_backhaul < \delta_2. \end{cases}$$

The max function is a function for taking a maximum value, $\delta_1$ is an air interface load margin of the target micro cell, and $\delta_2$ is a backhaul load margin of the target micro cell. The foregoing formula indicates that when *delta_load_air* is less than the air interface load margin of the target micro cell and *delta_load_backhaul* is less than the backhaul load margin of the target micro cell, a maximum value of the offloading threshold is selected as an optimal offloading threshold.

Similarly, when the offloading threshold is indicated by a channel gain, the max function may be replaced by a min function, and the min function is a function for taking a minimum value.

706. Offload the to-be-offloaded user equipment.

Specifically, if the parameter indicating the propagation environment of the target micro cell is a path loss, when a path loss between the to-be-offloaded user equipment and a micro base station in the target micro cell is less than or equal to the offloading threshold, the network side device determines that the to-be-offloaded user equipment performs communication by using the target micro cell, or when a path loss between the to-be-offloaded user equipment and a micro base station in the target micro cell is greater than the offloading threshold, determines that the to-be-offloaded user equipment performs communication by using the macro cell.

If the parameter indicating the propagation environment of the target micro cell is a channel gain, when a channel gain between the to-be-offloaded user equipment and a micro base station in the target micro cell is less than the offloading threshold, it is determined that the to-be-offloaded user equipment performs communication by using the macro cell, or when a channel gain between the to-be-offloaded user equipment and a micro base station in the target micro cell is greater than or equal to the offloading threshold, it is determined that the to-be-offloaded user equipment performs communication by using the target micro cell.

When the network side device determines that the to-be-offloaded user equipment performs communication by using the target micro cell,

if the to-be-offloaded user equipment is in an active state, the network side device hands over the to-be-offloaded user equipment, so that the to-be-offloaded user equipment is handed over to the target micro cell; or

if the to-be-offloaded user equipment is in an idle state, the network side device performs cell reselection for the to-be-offloaded user equipment, so that the target micro cell is selected for the to-be-offloaded user equipment; or

if the to-be-offloaded user equipment is in a state of attempting to access the macro cell, the network side device performs access control on the to-be-offloaded user equipment, so that the to-be-offloaded user equipment accesses the target micro cell.

Specifically, there are multiple manners in which the network side device hands over the activated user equipment to the target micro cell. For example, the network side device may modify a cell selection offset of the activated user equipment, so that the activated user equipment chooses to be handed over to the target micro cell. The network side device may also directly send instruction information to the activated user equipment, to instruct the activated user equipment to be handed over to the target micro cell.

Optionally, the network side device may modify a cell section offset of an idle user equipment, so that the idle user equipment may actively select the target micro cell as a serving cell.

Optionally, the network side device may send instruction information to the user equipment attempting to access the macro cell, to instruct the user equipment to access the target micro cell. The network side device in this embodiment of the present invention determines an offloading threshold according to service distribution information of a user equipment around a micro cell in a macro cell and a load status of the micro cell. In this way, when user equipments in different states are being offloaded, there is no need to re-determine all user equipments. The user equipments in different states in the macro cell only need to be compared with the offloading threshold, so that a user equipment meeting an offloading condition is offloaded to the micro cell. Therefore, the method can be used to easily perform load offloading on user equipments in different states.

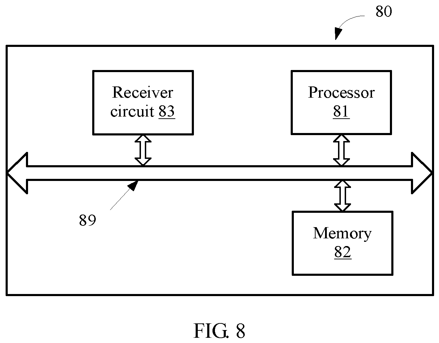

FIG. 8 is a block diagram of a network side device according to another embodiment of the present invention. A network side device 80 in FIG. 8 may be configured to implement steps and methods in the foregoing method embodiments. A heterogeneous network in which the network side device is located includes a macro cell and at least one micro cell in the macro cell. The network side device 80 in FIG. 8 includes a processor 81, a memory 82, and a receiver circuit 83. The processor 81, the memory 82, and the receiver circuit 83 are connected by using a bus system 89.

In addition, the network side device 80 may further include an antenna 115 and the like. The processor 81 controls an operation of the network side device 80. The memory 82 may include a read-only memory and a random access memory, and may provide an instruction and data for the processor 81. Apart of the memory 82 may further include a nonvolatile random access memory (NVRAM). In a specific application, a transmitter circuit 114 and the receiver circuit 83 may be coupled to the antenna 115. Components of the network side device 80 are coupled together by using the bus system 89, where in addition to including a data bus, the bus system 89 further includes a power bus, a control bus, and a status signal bus. However, for clarity of description, various buses are marked as the bus system 89 in the figure.

The processor 81 may be an integrated circuit chip and has a signal processing capability. The foregoing processor 81 may be a general processor, a digital signal processor (DSP), an application-specific integrated circuit (ASIC), a field programmable gate array (FPGA) or another programmable logic device, a discrete gate or transistor logic device, or a discrete hardware assembly, and may implement or execute the methods, the steps, and the logical block diagrams disclosed in the embodiments of the present invention. The general purpose processor may be a microprocessor, or the processor may be any normal processor or the like. With reference to all components of the hardware control network side device 80, the processor 81 reads information in the memory 82.

The method in FIG. 6 may be implemented by the network side device 80 in FIG. 8. To avoid repetition, details are not described again.

Specifically, under the control of the processor 81, the network side device 80 completes the following operations:

obtain load information of a target micro cell in the at least one micro cell and service distribution information of at least one user equipment within a first preset range around the target micro cell in the macro cell;

determine an offloading threshold according to the load information of the target micro cell and the service distribution information, where the offloading threshold is corresponding to a parameter indicating a propagation environment of the target micro cell; and

determine, according to the offloading threshold, whether a to-be-offloaded user equipment performs communication by using the macro cell or by using the target micro cell.

The network side device in this embodiment of the present invention determines an offloading threshold according to a service amount of a user equipment around a micro cell in a macro cell and a load status of the micro cell. In this way, when user equipments in different states are being offloaded, there is no need to re-determine all user equipments. The user equipments in different states in the macro cell only need to be compared with the offloading threshold, so that a user equipment meeting an offloading condition is offloaded to the micro cell. Therefore, the method can be used to easily perform load offloading on user equipments in different states.

Optionally, in another embodiment, the processor 81 may determine, according to the service distribution information, load usage, in the target micro cell, of a user equipment that is to be offloaded to the target micro cell and that is in the at least one user equipment within the first preset range around the target micro cell; and determine the offloading threshold according to the load usage and the load information of the target micro cell.

Optionally, in another embodiment, the offloading threshold is determined when the load usage is less than a load margin of the target micro cell.

Optionally, in another embodiment, the processor 81 may select the target micro cell from the at least one micro cell, where the target micro cell has highest macro service intensity in macro service intensity of the at least one micro cell, and the macro service intensity indicates service intensity of a user equipment in a macro cell around a micro cell.

Optionally, in another embodiment, the processor 81 may rasterize a coverage area of the macro cell, to obtain at least one raster; determine at least one target raster in the at least one raster, where the at least one target raster is within a second preset range around the target micro cell; and determine that at least one average service amount corresponding to the at least one target raster is the service distribution information.

Optionally, in another embodiment, the processor 81 may classify a network coverage area of the macro cell, to obtain at least one category; determine at least one target category in the at least one category, where the at least one target category is within a second preset range around the target micro cell; and determine that at least one average service amount corresponding to the at least one target category is the service distribution information.

Optionally, in another embodiment, if the parameter indicating the propagation environment of the target micro cell is a path loss, when a path loss between the to-be-offloaded user equipment and a micro base station in the target micro cell is less than or equal to the offloading threshold, the processor 81 may determine that the to-be-offloaded user equipment performs communication by using the target micro cell, or when a path loss between the to-be-offloaded user equipment and a micro base station in the target micro cell is greater than the offloading threshold, the processor 81 may determine that the to-be-offloaded user equipment performs communication by using the macro cell.

Optionally, in another embodiment, if the parameter indicating the propagation environment of the target micro cell is a channel gain, when a channel gain between the to-be-offloaded user equipment and a micro base station in the target micro cell is less than the offloading threshold, the processor 81 determines that the to-be-offloaded user equipment performs communication by using the macro cell, or when a channel gain between the to-be-offloaded user equipment and a micro base station in the target micro cell is greater than or equal to the offloading threshold, the processor 81 determines that the to-be-offloaded user equipment performs communication by using the target micro cell.

Optionally, in another embodiment, when the offloading unit determines that the to-be-offloaded user equipment performs communication by using the target micro cell, the processor 81 may further: when the to-be-offloaded user equipment is in an active state, hand over the to-be-offloaded user equipment, so that the to-be-offloaded user equipment is handed over to the target micro cell; or when the to-be-offloaded user equipment is in an idle state, perform cell reselection for the to-be-offloaded user equipment, so that the target micro cell is selected for the to-be-offloaded user equipment; or when the to-be-offloaded user equipment is in a state of attempting to access the macro cell, perform access control on the to-be-offloaded user equipment, so that the to-be-offloaded user equipment accesses the target micro cell.

It should be understood that "an embodiment" or "an embodiment" mentioned in the whole specification does not mean that particular features, structures, or characteristics related to the embodiment are included in at least one embodiment of the present invention. Therefore, "in an embodiment" or "in an embodiment" appearing throughout the specification does not refer to a same embodiment. In addition, these particular features, structures, or characteristics may be combined in one or more embodiments by using any appropriate manner. Sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in the embodiments of the present invention, "B corresponding to A" indicates that B is associated with A, and B may be determined according to A. However, it should further be understood that determining A according to B does not mean that B is determined according to A only; that is, B may also be determined according to A and/or other information.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

With descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (Disk) and disc (disc) used by the present invention includes a compact disc CD, a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

**Claims**

1. A network side device (20), wherein a heterogeneous network in which the network side device (20) is located comprises a macro cell and at least one micro cell in the macro cell, and the network side device (20) comprises:

   an obtaining unit (21), configured to obtain load information of a target micro cell included in the at least one micro cell and service distribution information of at least one user equipment within a first preset range around the target micro cell in the macro cell;
   a determining unit (22), configured to determine an offloading threshold according to the load information of the target micro cell and the service distribution information, wherein the offloading threshold is corresponding to a parameter indicating a propagation environment of the target micro cell; and
   an offloading unit (23), configured to determine, according to the offloading threshold, whether a to-be-offloaded user equipment performs communication by using the macro cell or by using the target micro cell;
wherein the parameter indicating the propagation environment of the target micro cell is a path loss or a channel gain;
wherein when the parameter indicating the propagation environment of the target micro cell is a path loss, the maximum path loss to the micro cell is the parameter indicating the propagation environment of the target micro cell when $delta\_load\_air = \dfrac{\sum\limits_{i \in U} w_{i,pico}}{W}$ is smaller than $\delta_1 =$ the air interface load margin of the target micro cell and when $delta\_load\_backhaul = \sum\limits_{i \in U} \dfrac{r_{i,pico}}{R}$ is smaller than $\delta_2 =$ a backhaul

load margin of the target micro cell, wherein $w_{i,pico}$ indicates a resource amount occupied and $r_{i,pico}$ is a rate that is obtained, in the target micro cell, by the user equipment i in the at least one user equipment to be offloaded to the target micro cell and $W$ is a total resource amount of the target micro cell; and $R$ is a maximum nominal rate of a backhaul link of the target micro cell;
wherein when the parameter indicating the propagation environment of the target micro cell is a channel gain, the parameter indicating the propagation environment of the target micro cell is selected from $g_{macro}$ and $g_{pico}$, wherein $g_{macro}$ is a channel gain between any user equipment in the user equipment to be offloaded to the target micro cell and a macro base station in the macro cell; and $g_{pico}$ is a channel gain between any user equipment in the user equipment to be offloaded to the target micro cell and a micro base station in a micro cell and $g_{macro}$ and $g_{pico}$ are used to obtain the rate $r_{macro}$ in the macro cell and the rate $r_{micro}$ in the micro cell.

2. The network side device (20) according to claim 1, wherein the determining unit (22) is specifically configured to:

   determine, according to the service distribution information, load usage, in the target micro cell, of the user equipment that is in the at least one user equipment within the first preset range around the target micro cell and that is to be offloaded to the target micro cell; and
   determine the offloading threshold according to the load usage and the load information of the target micro cell.

3. The network side device (20) according to claim 2, wherein the load information of the target micro cell comprises a load margin of the target micro cell; and the determining unit (22) is specifically configured to:
   determine the offloading threshold when the load usage is less than the load margin of the target micro cell.

4. The network side device (20) according to any one of claims 1 to 3, further comprising:
   a selection unit (24), configured to select the target micro cell from the at least one micro cell, wherein the target micro cell has highest macro service intensity in macro service intensity of the at least one micro cell, and the macro service intensity indicates service intensity of a user equipment in a macro cell around a micro cell.

5. The network side device (20) according to any one of claims 1 to 4, wherein the obtaining unit (21) is specifically configured to:

   rasterize a coverage area of the macro cell, to obtain at least one raster;
   determine at least one target raster in the at least one raster, wherein the at least one target raster is within a second preset range around the target micro cell; and
   determine that at least one average service amount corresponding to the at least one target raster is the service distribution information.

6. The network side device (20) according to any one of claims 1 to 4, wherein the obtaining unit (21) is specifically configured to:

   classify a network coverage area of the macro cell, to obtain at least one category;
   determine at least one target category in the at least one category, wherein the at least one target category is within a second preset range around the target micro cell; and
   determine that at least one average service amount corresponding to the at least one target category is the service distribution information.

7. The network side device (20) according to any one of claims 1 to 6, wherein the parameter indicating the propagation environment of the target micro cell is a path loss, and the offloading unit (23) is specifically configured to: when a path loss between the to-be-offloaded user equipment and a micro base station in the target micro cell is less than or equal to the offloading threshold, determine that the to-be-offloaded user equipment performs communication by using the target micro cell, or when a path loss between the to-be-offloaded user equipment and a micro base station in the target micro cell is greater than the offloading threshold, determine that the to-be-offloaded user equipment performs communication by using the macro cell.

8. The network side device (20) according to any one of claims 1 to 6, wherein if the parameter indicating the propagation environment of the target micro cell is a channel gain, the offloading unit (23) is specifically configured to: when a channel gain between the to-be-offloaded user equipment and a micro base station in the target micro cell is less than the offloading threshold, determine that the to-be-offloaded user equipment performs communication by using the macro cell, or when a channel gain between the to-be-offloaded user equipment and a micro base station in the target micro cell is greater than or equal to the offloading threshold, determine that the to-be-offloaded user equipment performs communication by using the target micro cell.

9. The network side device (20) according to any one of claims 1 to 8, wherein when the offloading unit (23) determines that the to-be-offloaded user equipment performs communication by using the target micro cell, the offloading unit (23) is further configured to:

when the to-be-offloaded user equipment is in an active state, hand over the to-be-offloaded user equipment, so that the to-be-offloaded user equipment is handed over to the target micro cell; or
when the to-be-offloaded user equipment is in an idle state, perform cell reselection for the to-be-offloaded user equipment, so that the target micro cell is selected for the to-be-offloaded user equipment; or
when the to-be-offloaded user equipment is in a state of attempting to access the macro cell, perform access control on the to-be-offloaded user equipment, so that the to-be-offloaded user equipment accesses the target micro cell.

10. A method for offloading load in a heterogeneous network, wherein the heterogeneous network comprises a macro cell and at least one micro cell in the macro cell, and the method comprises:

obtaining, by a network side device, load information of a target micro cell included in the at least one micro cell and service distribution information of at least one user equipment within a first preset range around the target micro cell in the macro cell;
determining, by a network side device, an offloading threshold according to the load information of the target micro cell and the service distribution information, wherein the offloading threshold is corresponding to a parameter indicating a propagation environment of the target micro cell; and
determining, by a network side device, according to the offloading threshold, whether a to-be-offloaded user equipment performs communication by using the macro cell or by using the target micro cell;
wherein the parameter indicating the propagation environment of the target micro cell is a path loss or a channel gain;
wherein when the parameter indicating the propagation environment of the target micro cell is a path loss, the maximum path loss to the micro cell is the parameter indicating the propagation environment of the target micro cell when $delta\_load\_air = \dfrac{\sum_{i \in U} w_{i,pico}}{W}$ is smaller than $\delta_1$ = the air interface load margin of the target micro cell and when $delta\_load\_backhaul = \sum_{i \in U} \dfrac{r_{i,pico}}{R}$ is smaller than $\delta_2$ = a backhaul

load margin of the target micro cell, wherein $w_{i,pico}$ indicates a resource amount occupied and $r_{i,pico}$ is a rate that is obtained, in the target micro cell, by the user equipment i in the at least one user equipment to be offloaded to the target micro cell and $W$ is a total resource amount of the target micro cell; and $R$ is a maximum nominal rate of a backhaul link of the target micro cell;
wherein when the parameter indicating the propagation environment of the target micro cell is a channel gain, the parameter indicating the propagation environment of the target micro cell is selected from $g_{macro}$ and $g_{pico}$, wherein $g_{macro}$ is a channel gain between any user equipment in the user equipment to be offloaded to the target micro cell and a macro base station in the macro cell; and $g_{pico}$ is a channel gain between any user equipment in the user equipment to be offloaded to the target micro cell and a micro base station in a micro cell and $g_{macro}$ and $g_{pico}$ are used to obtain the rate $r_{macro}$ in the macro cell and the rate $r_{micro}$ in the micro cell.

11. The method according to claim 10, wherein the determining an offloading threshold according to the load information of the target micro cell and the service distribution information comprises:

determining, according to the service distribution information, load usage, in the target micro cell, of the user equipment that is in the at least one user equipment within the first preset range around the target micro cell and that is to be offloaded to the target micro cell; and
determining the offloading threshold according to the load usage and the load information of the target micro cell.

12. The method according to claim 11, wherein the load information of the target micro cell comprises a load margin of the target micro cell, and the determining the offloading threshold according to the load usage and the load information of the target micro cell comprises:
determining the offloading threshold when the load usage is less than the load margin of the target micro cell.

13. The method according to any one of claims 10 to 12, further comprising:
selecting the target micro cell from the at least one micro cell, wherein the target micro cell has highest macro service intensity in macro service intensity of the at least one micro cell, and the macro service intensity indicates service intensity of a user equipment in a macro cell around a micro cell.

14. The method according to any one of claims 10 to 13, wherein the obtaining service distribution information of at least one user equipment within a first preset range around the target micro cell in the macro cell comprises:

rasterizing a coverage area of the macro cell, to obtain at least one raster;
determining at least one target raster in the at least one raster, wherein the at least one target raster is within a second preset range around the target micro cell; and
determining that at least one average service amount corresponding to the at least one target raster is the service distribution information.

15. The method according to any one of claims 10 to 13, wherein the obtaining service distribution information of at least one user equipment within a first preset range around the target micro cell in the macro cell comprises:

classifying a network coverage area of the macro cell, to obtain at least one category;
determining at least one target category in the at least one category, wherein the at least one target category is within a second preset range around the target micro cell; and
determining that at least one average service amount corresponding to the at least one target category is the service distribution information.

**Patentansprüche**

1. Netzwerkseitige Vorrichtung (20), wobei ein heterogenes Netzwerk, in dem sich die netzwerkseitige Vorrichtung (20) befindet, eine Makrozelle und zumindest eine Mikrozelle in der Makrozelle umfasst, und die netzwerkseitige Vorrichtung (20) Folgendes umfasst:

eine Erhaltungseinheit (21), die konfiguriert ist, um Lastinformationen einer Zielmikrozelle, die in der zumindest einen Mikrozelle enthalten ist, und Dienstverteilungsinformationen von zumindest einem Benutzergerät innerhalb eines ersten vorbestimmten Bereichs um die Zielmikrozelle in der Makrozelle herum zu erhalten; eine Bestimmungseinheit (22), die konfiguriert ist, um einen Abladeschwellenwert gemäß den Lastinformationen der Zielmikrozelle und den Dienstverteilungsinformationen zu bestimmen, wobei der Abladeschwellenwert einem Parameter entspricht, der eine Ausbreitungsumgebung der Zielmikrozelle angibt; und
eine Abladeeinheit (23), die konfiguriert ist, um gemäß dem Abladeschwellenwert zu bestimmen, ob ein abzuladendes Benutzergerät Kommunikation durchführt, indem die Makrozelle verwendet wird oder indem die Zielmikrozelle verwendet wird;

wobei der Parameter, der die Ausbreitungsumgebung der Zielmikrozelle angibt, ein Pfadverlust oder ein Kanalgewinn ist;

wobei, wenn der Parameter, der die Ausbreitungsumgebung der Zielmikrozelle angibt, ein Pfadverlust ist, der maximale Pfadverlust zu der Mikrozelle der Parameter ist, der die Ausbreitungsumgebung der Zielmikrozelle angibt, wenn $delta\_load\_air = \dfrac{\sum_{i \in U} w_{i,pico}}{W}$ kleiner als $\delta_1$ = die Luftschnittstellenlastgrenze der

Zielmikrozelle ist und wenn $delta\_load\_backhaul = \sum_{i \in U} \dfrac{r_{i,pico}}{R}$ kleiner als $\delta_2$ = eine Back-

haul-Lastgrenze der Zielmikrozelle ist, wobei $w_{i,pico}$ eine belegte Ressourcenmenge angibt und $r_{i,pico}$ eine Rate ist, die erhalten wird, in der Zielmikrozelle, durch das Benutzergerät i in dem zumindest einen an die Zielmikrozelle abzuladenden

Benutzergerät, und $W$ eine Gesamtressourcenmenge der Zielmikrozelle ist; und $R$ eine maximale Nominalrate einer Backhaul-Verbindung der Zielmikrozelle ist;

wobei, wenn der Parameter, der die Ausbreitungsumgebung der Zielmikrozelle angibt, ein Kanalgewinn ist, der Parameter, der die Ausbreitungsumgebung der Zielmikrozelle angibt, aus $g_{macro}$ und $g_{pico}$ ausgewählt ist, wobei $g_{macro}$ ein Kanalgewinn zwischen einem beliebigen Benutzergerät in dem an die Zielmikrozelle abzuladenden Benutzergerät und einer Makrobasisstation in der Makrozelle ist; und $g_{pico}$ ein Kanalgewinn zwischen einem beliebigen Benutzergerät in dem an die Zielmikrozelle abzuladenden Benutzergerät und einer Mikrobasisstation in einer Mikrozelle ist und $g_{macro}$ und $g_{pico}$ verwendet werden, um die Rate $r_{macro}$ in der Makrozelle und die Rate $r_{micro}$ in der Mikrozelle zu erhalten.

2. Netzwerkseitige Vorrichtung (20) nach Anspruch 1, wobei die Bestimmungseinheit (22) insbesondere für Folgendes konfiguriert ist:

Bestimmen, gemäß den Dienstverteilungsinformationen, von Lastgebrauch, in der Zielmikrozelle, des Benutzergeräts, das sich in dem zumindest einen Benutzergerät innerhalb des ersten vorbestimmten Bereichs um die Zielmikrozelle herum befindet und das zu der Zielmikrozelle abzuladen ist; und
Bestimmen des Abladeschwellenwertes gemäß dem Lastgebrauch und den Lastinformationen der Zielmikrozelle.

3. Netzwerkseitige Vorrichtung (20) nach Anspruch 2, wobei die Lastinformationen der Zielmikrozelle eine Lastgrenze der Zielmikrozelle umfassen; und die Bestimmungseinheit (22) insbesondere für Folgendes konfiguriert ist:
Bestimmen des Abladeschwellenwertes, wenn der Lastgebrauch kleiner als die Lastgrenze der Zielmikrozelle ist.

4. Netzwerkseitige Vorrichtung (20) nach einem der Ansprüche 1 bis 3, ferner umfassend:
eine Auswahleinheit (24), die konfiguriert ist, um die Zielmikrozelle aus der zumindest einen Mikrozelle auszuwählen, wobei die Zielmikrozelle die höchste Makrodienstintensität der Makrodienstintensität der zumindest einen Mikrozelle aufweist und die Makrodienstintensität Dienstintensität eines Benutzergeräts in einer Makrozelle um eine Mikrozelle herum angibt.

5. Netzwerkseitige Vorrichtung (20) nach einem der Ansprüche 1 bis 4, wobei die Erhaltungseinheit (21) insbesondere für Folgendes konfiguriert ist:

Rastern eines Abdeckungsbereichs der Makrozelle, um zumindest ein Raster zu erhalten;
Bestimmen von zumindest einem Zielraster in dem zumindest einen Raster, wobei sich das zumindest eine Zielraster innerhalb eines zweiten vorbestimmten Bereichs um die Zielmikrozelle herum befindet; und
Bestimmen, dass zumindest eine Abdeckungsdienstmenge entsprechend dem zumindest einen Zielraster die Dienstverteilungsinformationen sind.

6. Netzwerkseitige Vorrichtung (20) nach einem der Ansprüche 1 bis 4, wobei die Erhaltungseinheit (21) insbesondere für Folgendes konfiguriert ist:

Klassifizieren eines Netzwerkabdeckungsbereichs der Makrozelle, um zumindest eine Kategorie zu erhalten; Bestimmen von zumindest einer Zielkategorie in der zumindest einen Kategorie, wobei sich die zumindest eine Zielkategorie innerhalb eines zweiten vorbestimmten Bereichs um die Zielmikrozelle herum befindet; und Bestimmen, dass zumindest eine durchschnittliche Dienstmenge entsprechend der zumindest einen Zielkategorie die Dienstverteilungsinformationen sind.

7. Netzwerkseitige Vorrichtung (20) nach einem der Ansprüche 1 bis 6, wobei der Parameter, der die Ausbreitungsumgebung der Zielmikrozelle angibt, ein Pfadverlust ist, und die Abladeeinheit (23) insbesondere für Folgendes konfiguriert ist:
wenn ein Pfadverlust zwischen dem abzuladenden Benutzergerät und einer Mikrobasisstation in der Zielmikrozelle kleiner als der oder gleich dem Abladeschwellenwert ist, Bestimmen, dass das abzuladende Benutzergerät Kommunikation durchführt, indem die Zielmikrozelle verwendet wird, oder wenn ein Pfadverlust zwischen dem abzuladenden Benutzergerät und einer Mikrobasisstation in der Zielmikrozelle größer als der Abladeschwellenwert ist, Bestimmen, dass das abzuladende Benutzergerät Kommunikation durchführt, indem die Makrozelle verwendet wird.

8. Netzwerkseitige Vorrichtung (20) nach einem der Ansprüche 1 bis 6, wobei, wenn der Parameter, der die Ausbreitungsumgebung der Zielmikrozelle angibt, ein Kanalgewinn ist, die Abladeeinheit (23) insbesondere für Folgendes konfiguriert ist:

wenn ein Kanalgewinn zwischen dem abzuladenden Benutzergerät und
einer Mikrobasisstation in der Zielmikrozelle kleiner als der Abladeschwellenwert ist, Bestimmen, dass das abzuladende Benutzergerät Kommunikation durchführt, indem die Makrozelle verwendet wird, oder wenn ein Kanalgewinn zwischen dem abzuladenden Benutzergerät und einer Mikrobasisstation in der Zielmikrozelle größer als der oder gleich dem Abladeschwellenwert ist, Bestimmen, dass das abzuladende Benutzergerät Kommunikation durchführt, indem die Zielmikrozelle verwendet wird.

9. Netzwerkseitige Vorrichtung (20) nach einem der Ansprüche 1 bis 8, wobei, wenn die Abladeeinheit (23) bestimmt, dass das abzuladende Benutzergerät Kommunikation durchführt, indem die Zielmikrozelle verwendet wird, die Abladeeinheit (23) ferner für Folgendes konfiguriert ist:

wenn sich das abzuladende Benutzergerät in einem aktiven Zustand befindet, Übergeben des abzuladenden Benutzergeräts, sodass das abzuladende Benutzergerät an die Zielmikrozelle übergeben wird; oder
wenn sich das abzuladende Benutzergerät in einem Ruhezustand befindet, Durchführen von Zellneuauswahl für das abzuladende Benutzergerät, sodass die Zielmikrozelle für das abzuladende Benutzergerät ausgewählt wird; oder
wenn sich das abzuladende Benutzergerät in einem Zustand des Versuchs befindet, auf die Makrozelle zuzugreifen, Durchführen von Zugriffskontrolle an dem abzuladenden Benutzergerät, sodass das abzuladende Benutzergerät auf die Zielmikrozelle zugreift.

10. Verfahren zum Abladen von Last in einem heterogenen Netzwerk, wobei das heterogene Netzwerk eine Makrozelle und zumindest eine Mikrozelle in der Makrozelle umfasst, und das Verfahren Folgendes umfasst:

Erhalten, durch eine netzwerkseitige Vorrichtung, von Lastinformationen einer Zielmikrozelle, die in der zumindest einen Mikrozelle enthalten ist, und von Dienstverteilungsinformationen von zumindest einem Benutzergerät innerhalb eines ersten vorbestimmten Bereichs um die Zielmikrozelle in der Makrozelle herum;
Bestimmen, durch eine netzwerkseitige Vorrichtung, eines Abladeschwellenwertes gemäß den Lastinformationen der Zielmikrozelle und den Dienstverteilungsinformationen, wobei der Abladeschwellenwert einem Parameter entspricht, der eine Ausbreitungsumgebung der Zielmikrozelle angibt; und
Bestimmen, durch eine netzwerkseitige Vorrichtung, gemäß dem Abladeschwellenwert, ob ein abzuladendes Benutzergerät Kommunikation durchführt, indem die Makrozelle verwendet wird oder indem die Zielmikrozelle verwendet wird;
wobei der Parameter, der die Ausbreitungsumgebung der Zielmikrozelle angibt, ein Pfadverlust oder ein Kanalgewinn ist;

wobei, wenn der Parameter, der die Ausbreitungsumgebung der Zielmikrozelle angibt, ein Pfadverlust ist, der maximale Pfadverlust zu der Mikrozelle der Parameter ist, der die Ausbreitungsumgebung der Zielmikrozelle angibt, wenn $delta\_load\_air = \dfrac{\sum\limits_{i \in U} w_{i,pico}}{W}$ kleiner als $\delta_1$ = die Luftschnittstellenlastgrenze der

Zielmikrozelle ist und wenn *delta load* **backhaul** $delta\_load\_backhaul = \sum\limits_{i \in U} \dfrac{r_{i,pico}}{R}$ kleiner

als $\delta_2$: = eine Backhaul-Lastgrenze der Zielmikrozelle ist, wobei $w_{i,pico}$ eine belegte Ressourcenmenge angibt und $r_{i,pico}$ eine Rate ist, die erhalten wird, in der Zielmikrozelle, durch das Benutzergerät i in dem zumindest einen an die Zielmikrozelle abzuladenden Benutzergerät, und $W$ eine Gesamtressourcenmenge der Zielmikrozelle ist; und $R$ eine maximale Nominalrate einer Backhaul-Verbindung der Zielmikrozelle ist;
wobei, wenn der Parameter, der die Ausbreitungsumgebung der Zielmikrozelle angibt, ein Kanalgewinn ist, der Parameter, der die Ausbreitungsumgebung der Zielmikrozelle angibt, aus $g_{macro}$ und $g_{pico}$ ausgewählt ist, wobei $g_{macro}$ ein Kanalgewinn zwischen einem beliebigen Benutzergerät in dem an die Zielmikrozelle abzuladenden Benutzergerät und einer Makrobasisstation in der Makrozelle ist; und $g_{pico}$ ein Kanalgewinn zwischen einem beliebigen Benutzergerät in dem an die Zielmikrozelle abzuladenden Benutzergerät und einer Mikrobasisstation in einer Mikrozelle ist und $g_{macro}$ und $g_{pico}$ verwendet werden, um die Rate $r_{macro}$ in der Makrozelle und die Rate $r_{micro}$ in der Mikrozelle zu erhalten.

11. Verfahren nach Anspruch 10, wobei das Bestimmen eines Abladeschwellenwertes gemäß den Lastinformationen der Zielmikrozelle und den Dienstverteilungsinformationen Folgendes umfasst:

Bestimmen, gemäß den Dienstverteilungsinformationen, von Lastgebrauch, in der Zielmikrozelle, des Benutzergeräts, das sich in dem zumindest einen Benutzergerät innerhalb des ersten vorbestimmten Bereichs um die Zielmikrozelle herum befindet und das zu der Zielmikrozelle abzuladen ist; und
Bestimmen des Abladeschwellenwertes gemäß dem Lastgebrauch und den Lastinformationen der Zielmikrozelle.

12. Verfahren nach Anspruch 11, wobei die Lastinformationen der Zielmikrozelle eine Lastgrenze der Zielmikrozelle umfassen und das Bestimmen des Abladeschwellenwertes gemäß dem Lastgebrauch und den Lastinformationen der Zielmikrozelle Folgendes umfasst:
Bestimmen des Abladeschwellenwertes, wenn der Lastgebrauch kleiner als die Lastgrenze der Zielmikrozelle ist.

13. Verfahren nach einem der Ansprüche 10 bis 12, ferner umfassend:
Auswählen der Zielmikrozelle aus der zumindest einen Mikrozelle, wobei die Zielmikrozelle die höchste Makrodienstintensität der Makrodienstintensität der zumindest einen Mikrozelle aufweist und die Makrodienstintensität Dienstintensität eines Benutzergeräts in einer Makrozelle um eine Mikrozelle herum angibt.

14. Verfahren nach einem der Ansprüche 10 bis 13, wobei das Erhalten von Dienstverteilungsinformationen von zumindest einem Benutzergerät innerhalb eines ersten vorbestimmten Bereichs um die Zielmikrozelle in der Makrozelle herum Folgendes umfasst:

Rastern eines Abdeckungsbereichs der Makrozelle, um zumindest ein Raster zu erhalten;
Bestimmen von zumindest einem Zielraster in dem zumindest einen Raster, wobei sich das zumindest eine Zielraster innerhalb eines zweiten vorbestimmten Bereichs um die Zielmikrozelle herum befindet; und
Bestimmen, dass zumindest eine Abdeckungsdienstmenge entsprechend dem zumindest einen Zielraster die Dienstverteilungsinformationen sind.

15. Verfahren nach einem der Ansprüche 10 bis 13, wobei das Erhalten von Dienstverteilungsinformationen von zumindest einem Benutzergerät innerhalb eines ersten vorbestimmten Bereichs um die Zielmikrozelle in der Makrozelle herum Folgendes umfasst:

Klassifizieren eines Netzwerkabdeckungsbereichs der Makrozelle, um zumindest eine Kategorie zu erhalten;

Bestimmen von zumindest einer Zielkategorie in der zumindest einen Kategorie, wobei sich die zumindest eine Zielkategorie innerhalb eines zweiten vorbestimmten Bereichs um die Zielmikrozelle herum befindet; und Bestimmen, dass zumindest eine durchschnittliche Dienstmenge entsprechend der zumindest einen Zielkategorie die Dienstverteilungsinformationen sind.

## Revendications

1. Dispositif côté réseau (20), dans lequel un réseau hétérogène dans lequel le dispositif côté réseau (20) est situé comprend une macrocellule et au moins une microcellule dans la macrocellule, et le dispositif côté réseau (20) comprend :

une unité d'obtention (21), conçue pour obtenir des informations de charge d'une microcellule cible incluse dans l'au moins une microcellule et des informations de distribution de service d'au moins un équipement utilisateur dans une première plage prédéfinie autour de la microcellule cible dans la macrocellule ;
une unité de détermination (22), conçue pour déterminer un seuil de déchargement conformément aux informations de charge de la microcellule cible et aux informations de distribution de service, dans lequel le seuil de déchargement correspond à un paramètre indiquant un environnement de propagation de la microcellule cible ; et
une unité de déchargement (23), conçue pour déterminer, conformément au seuil de déchargement, si un équipement utilisateur devant être déchargé effectue une communication en utilisant la macrocellule ou en utilisant la microcellule cible ;
dans lequel le paramètre indiquant l'environnement de propagation de la microcellule cible est un affaiblissement sur le trajet ou un gain sur le canal ;
dans lequel lorsque le paramètre indiquant l'environnement de propagation de la microcellule cible est un affaiblissement sur le trajet,
l'affaiblissement maximal sur le trajet vers la microcellule est le paramètre indiquant l'environnement de propagation de la microcellule cible lorsque $delta\_load\_air = \dfrac{\sum\limits_{i \in U} w_{i,pico}}{W}$ est inférieur à $\delta_1 =$ la marge de charge d'interface air de la microcellule cible et lorsque $delta\_load\_backhaul = \sum\limits_{i \in U} \dfrac{r_{i,pico}}{R}$ est inférieur à $\delta_2 =$ une marge de charge terrestre de la microcellule cible, dans lequel $w_{i,pico}$ indique une quantité de ressources occupée et $r_{i,pico}$ est un débit qui est obtenu, dans la microcellule cible, par l'équipement utilisateur i dans l'au moins un équipement utilisateur devant être déchargé vers la microcellule cible et $W$ est une quantité de ressources totale de la microcellule cible ; et $R$ est un débit nominal maximal d'une liaison terrestre de la microcellule cible ;
dans lequel lorsque le paramètre indiquant l'environnement de propagation de la microcellule cible est un gain sur le canal, le paramètre indiquant l'environnement de propagation de la microcellule cible est sélectionné parmi $g_{macro}$ et $g_{pico}$, dans lequel $g_{macro}$ est un gain sur le canal entre un quelconque équipement utilisateur dans l'équipement utilisateur devant être déchargé vers la microcellule cible et une station de base macro dans la macrocellule ; et $g_{pico}$ est un gain sur le canal entre un quelconque équipement utilisateur dans l'équipement utilisateur devant être déchargé vers la microcellule cible et une station de base micro dans une microcellule et $g_{macro}$ et $g_{pico}$ sont utilisés pour obtenir le débit $r_{macro}$ dans la macrocellule et le débit $r_{micro}$ dans la microcellule.

2. Dispositif côté réseau (20) selon la revendication 1, dans lequel l'unité de détermination (22) est spécifiquement conçue pour :

déterminer, conformément aux informations de distribution de service, un usage de charge, dans la microcellule cible, de l'équipement utilisateur qui est dans l'au moins un équipement utilisateur dans la première plage prédéfinie autour de la microcellule cible et qui doit être déchargé vers la microcellule cible ; et
déterminer le seuil de déchargement conformément à l'usage de charge et aux informations de charge de la microcellule cible.

3. Dispositif côté réseau (20) selon la revendication 2, dans lequel les informations de charge de la microcellule cible comprennent une marge de charge de la microcellule cible ; et l'unité de détermination (22) est spécifiquement conçue pour :
déterminer le seuil de déchargement lorsque l'usage de charge est inférieur à la marge de charge de la microcellule cible.

4. Dispositif côté réseau (20) selon l'une quelconque des revendications 1 à 3, comprenant en outre :
une unité de sélection (24), conçue pour sélectionner la microcellule cible parmi l'au moins une microcellule, dans lequel la microcellule cible a l'intensité de service macro la plus élevée dans une intensité de service macro de l'au moins une microcellule, et l'intensité de service macro indique une intensité de service d'un équipement utilisateur dans une macrocellule autour d'une microcellule.

5. Dispositif côté réseau (20) selon l'une quelconque des revendications 1 à 4, dans lequel l'unité d'obtention (21) est spécifiquement conçue pour :

rastériser une zone de couverture de la macrocellule, pour obtenir au moins un raster ;
déterminer au moins un raster cible dans l'au moins un raster, dans lequel l'au moins un raster cible est dans une seconde plage prédéfinie autour de la microcellule cible ; et
déterminer qu'au moins une quantité de service moyenne correspondant à l'au moins un raster cible est les informations de distribution de service.

6. Dispositif côté réseau (20) selon l'une quelconque des revendications 1 à 4, dans lequel l'unité d'obtention (21) est spécifiquement conçue pour :

classifier une zone de couverture de réseau de la macrocellule, pour obtenir au moins une catégorie ;
déterminer au moins une catégorie cible dans l'au moins une catégorie, dans lequel l'au moins une catégorie cible est dans une seconde plage prédéfinie autour de la microcellule cible ; et
déterminer qu'au moins une quantité de service moyenne correspondant à l'au moins une catégorie cible est les informations de distribution de service.

7. Dispositif côté réseau (20) selon l'une quelconque des revendications 1 à 6, dans lequel le paramètre indiquant l'environnement de propagation de la microcellule cible est un affaiblissement sur le trajet, et l'unité de déchargement (23) est spécifiquement conçue pour : lorsqu'un affaiblissement sur le trajet entre l'équipement utilisateur devant être déchargé et une station de base micro dans la microcellule cible est inférieur ou égal au seuil de déchargement, déterminer que l'équipement utilisateur devant être déchargé effectue une communication en utilisant la microcellule cible, ou lorsqu'un affaiblissement sur le trajet entre l'équipement utilisateur devant être déchargé et une station de base micro dans la microcellule cible est supérieur au seuil de déchargement, déterminer que l'équipement utilisateur devant être déchargé effectue une communication en utilisant la macrocellule.

8. Dispositif côté réseau (20) selon l'une quelconque des revendications 1 à 6, dans lequel si le paramètre indiquant l'environnement de propagation de la microcellule cible est un gain sur le canal, l'unité de déchargement (23) est spécifiquement conçue pour : lorsqu'un gain sur le canal entre l'équipement utilisateur devant être déchargé et une station de base micro dans la microcellule cible est inférieur au seuil de déchargement, déterminer que l'équipement utilisateur devant être déchargé effectue une communication en utilisant la macrocellule, ou lorsqu'un gain sur le canal entre l'équipement utilisateur devant être déchargé et une station de base micro dans la microcellule cible est supérieur ou égal au seuil de déchargement, déterminer que l'équipement utilisateur devant être déchargé effectue une communication en utilisant la microcellule cible.

9. Dispositif côté réseau (20) selon l'une quelconque des revendications 1 à 8, dans lequel lorsque l'unité de déchargement (23) détermine que l'équipement utilisateur devant être déchargé effectue une communication en utilisant la microcellule cible, l'unité de déchargement (23) est en outre conçue pour :

lorsque l'équipement utilisateur devant être déchargé est dans un état actif, transférer l'équipement utilisateur devant être déchargé, de sorte que l'équipement utilisateur devant être déchargé soit transféré vers la microcellule cible ; ou
lorsque l'équipement utilisateur devant être déchargé est dans un état de veille, effectuer une resélection de cellule pour l'équipement utilisateur devant être déchargé, de sorte que la microcellule cible soit sélectionnée pour l'équipement utilisateur devant être déchargé ; ou

lorsque l'équipement utilisateur devant être déchargé est dans un état de tentative d'accès à la macrocellule, effectuer une commande d'accès sur l'équipement utilisateur devant être déchargé, de sorte que l'équipement utilisateur devant être déchargé accède à la microcellule cible.

**10.** Procédé permettant de décharger une charge dans un réseau hétérogène, dans lequel le réseau hétérogène comprend une macrocellule et au moins une microcellule dans la macrocellule, et le procédé comprend :

l'obtention, par un dispositif côté réseau, d'informations de charge d'une microcellule cible incluse dans l'au moins une microcellule et d'informations de distribution de service d'au moins un équipement utilisateur dans une première plage prédéfinie autour de la microcellule cible dans la macrocellule ;

la détermination, par un dispositif côté réseau, d'un seuil de déchargement conformément aux informations de charge de la microcellule cible et aux informations de distribution de service, dans lequel le seuil de déchargement correspond à un paramètre indiquant un environnement de propagation de la microcellule cible ; et

le fait de déterminer, par un dispositif côté réseau, conformément au seuil de déchargement, si un équipement utilisateur devant être déchargé effectue une communication en utilisant la macrocellule ou en utilisant la microcellule cible ;

dans lequel le paramètre indiquant l'environnement de propagation de la microcellule cible est un affaiblissement sur le trajet ou un gain sur le canal ;

dans lequel lorsque le paramètre indiquant l'environnement de propagation de la microcellule cible est un affaiblissement sur le trajet,

l'affaiblissement maximal sur le trajet vers la microcellule est le paramètre indiquant l'environnement de propagation de la microcellule cible lorsque
$$delta\_load\_air = \frac{\sum_{i \in U} w_{i,pico}}{W}$$
est inférieur à $\delta_1 =$

la marge de charge d'interface air de la microcellule cible et lorsque
$$delta\_load\_backhaul = \sum_{i \in U} \frac{r_{i,pico}}{R}$$
est inférieur à $\delta_2 =$ une marge de charge terrestre de la microcellule cible, dans lequel $w_{i,pico}$ indique une quantité de ressources occupée et $r_{i,pico}$ est un débit qui est obtenu, dans la microcellule cible, par l'équipement utilisateur i dans l'au moins un équipement utilisateur devant être déchargé vers la microcellule cible et $W$ est une quantité de ressources totale de la microcellule cible ; et $R$ est un débit nominal maximal d'une liaison terrestre de la microcellule cible ;

dans lequel lorsque le paramètre indiquant l'environnement de propagation de la microcellule cible est un gain sur le canal, le paramètre indiquant l'environnement de propagation de la microcellule cible est sélectionné parmi $g_{macro}$ et $g_{pico}$, dans lequel $g_{macro}$ est un gain sur le canal entre un quelconque équipement utilisateur dans l'équipement utilisateur devant être déchargé vers la microcellule cible et une station de base macro dans la macrocellule ; et $g_{pico}$ est un gain sur le canal entre un quelconque équipement utilisateur dans l'équipement utilisateur devant être déchargé vers la microcellule cible et une station de base micro dans une microcellule et $g_{macro}$ et $g_{pico}$ sont utilisés pour obtenir le débit $r_{macro}$ dans la macrocellule et le débit $r_{micro}$ dans la microcellule.

**11.** Procédé selon la revendication 10, dans lequel la détermination d'un seuil de déchargement conformément aux informations de charge de la microcellule cible et aux informations de distribution de service comprend :

la détermination, conformément aux informations de distribution de service, d'un usage de charge, dans la microcellule cible, de l'équipement utilisateur qui est dans l'au moins un équipement utilisateur dans la première plage prédéfinie autour de la microcellule cible et qui doit être déchargé vers la microcellule cible ; et

la détermination du seuil de déchargement conformément à l'usage de charge et aux informations de charge de la microcellule cible.

**12.** Procédé selon la revendication 11, dans lequel les informations de charge de la microcellule cible comprennent une marge de charge de la microcellule cible, et la détermination du seuil de déchargement conformément à l'usage de charge et aux informations de charge de la microcellule cible comprend :

la détermination du seuil de déchargement lorsque l'usage de charge est inférieur à la marge de charge de la microcellule cible.

**13.** Procédé selon l'une quelconque des revendications 10 à 12, comprenant en outre :
la sélection de la microcellule cible parmi l'au moins une microcellule, dans lequel la microcellule cible a l'intensité de service macro la plus élevée dans une intensité de service macro de l'au moins une microcellule, et l'intensité de service macro indique une intensité de service d'un équipement utilisateur dans une macrocellule autour d'une microcellule.

**14.** Procédé selon l'une quelconque des revendications 10 à 13, dans lequel l'obtention d'informations de distribution de service d'au moins un équipement utilisateur dans une première plage prédéfinie autour de la microcellule cible dans la macrocellule comprend :

la rastérisation d'une zone de couverture de la macrocellule, pour obtenir au moins un raster ;
la détermination d'au moins un raster cible dans l'au moins un raster, dans lequel l'au moins un raster cible est dans une seconde plage prédéfinie autour de la microcellule cible ; et
la détermination du fait qu'au moins une quantité de service moyenne correspondant à l'au moins un raster cible est les informations de distribution de service.

**15.** Procédé selon l'une quelconque des revendications 10 à 13, dans lequel l'obtention d'informations de distribution de service d'au moins un équipement utilisateur dans une première plage prédéfinie autour de la microcellule cible dans la macrocellule comprend :

la classification d'une zone de couverture de réseau de la macrocellule, pour obtenir au moins une catégorie ;
la détermination d'au moins une catégorie cible dans l'au moins une catégorie, dans lequel l'au moins une catégorie cible est dans une seconde plage prédéfinie autour de la microcellule cible ; et
la détermination du fait qu'au moins une quantité de service moyenne correspondant à l'au moins une catégorie cible est les informations de distribution de service.

FIG. 1

FIG. 2

FIG. 3

FIG. 4

```
┌─────────────────────────────────────────┐
│  ┌───────────────────────────────┐       │
│  │         Obtaining unit         │ ⌇  21 │
│  └───────────────────────────────┘       │
│                  │                        │
│  ┌───────────────────────────────┐       │
│  │        Determining unit        │ ⌇  22 │
│  └───────────────────────────────┘       │
│                  │                        │
│  ┌───────────────────────────────┐       │
│  │        Offloading unit         │ ⌇  23 │
│  └───────────────────────────────┘       │
│                  │                        │
│  ┌───────────────────────────────┐       │
│  │         Selection unit         │ ⌇  24 │
│  └───────────────────────────────┘       │
│                                    ⌇  20  │
└─────────────────────────────────────────┘
```

FIG. 5

```
┌─────────────────────────────────────────────────────┐
│  Obtain load information of a target micro cell in    │       601
│  at least one micro cell and service distribution     │    ⌇
│  information of at least one user equipment within a   │
│  first preset range around the target micro cell in   │
│  a macro cell                                         │
└─────────────────────────────────────────────────────┘
                         │
                         ▼
┌─────────────────────────────────────────────────────┐
│  Determine an offloading threshold according to the   │       602
│  load information of the target micro cell and the    │    ⌇
│  service distribution information, where the           │
│  offloading threshold is corresponding to a parameter │
│  indicating a propagation environment of the target   │
│  micro cell                                           │
└─────────────────────────────────────────────────────┘
                         │
                         ▼
┌─────────────────────────────────────────────────────┐
│  Determine, according to the offloading threshold,    │       603
│  whether a to-be-offloaded user equipment performs    │    ⌇
│  communication by using the macro cell or by using    │
│  the target micro cell                                │
└─────────────────────────────────────────────────────┘
```

FIG. 6

```
┌─────────────────────────────────────────────────────┐      701
│  Obtain service distribution information of user     │   ⟋
│  equipment in a macro cell around at least one       │  ⟍⟋
│  micro cell                                          │
└─────────────────────────────────────────────────────┘
                         │
                         ▼
┌─────────────────────────────────────────────────────┐      702
│  Trigger offloading of load of the macro cell        │  ⟍⟋
└─────────────────────────────────────────────────────┘
                         │
                         ▼
┌─────────────────────────────────────────────────────┐      703
│  Trigger the micro cell to offload the load          │  ⟍⟋
└─────────────────────────────────────────────────────┘
                         │
                         ▼
┌─────────────────────────────────────────────────────┐      704
│  Select a target micro cell to which the load is     │  ⟍⟋
│  offloaded                                           │
└─────────────────────────────────────────────────────┘
                         │
                         ▼
┌─────────────────────────────────────────────────────┐      705
│  Calculate an offloading threshold                   │  ⟍⟋
└─────────────────────────────────────────────────────┘
                         │
                         ▼
┌─────────────────────────────────────────────────────┐      706
│  Offload a to-be-offloaded user equipment            │  ⟍⟋
└─────────────────────────────────────────────────────┘
```

FIG. 7

80

Receiver
circuit 83

Processor
81

Memory
82

89

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140198659 A1